(19)

Europäisches
Patentamt
European
Patent Office
Office européen
des brevets

(11) **EP 2 085 279 B1**

(12) **EUROPEAN PATENT SPECIFICATION**

(45) Date of publication and mention
of the grant of the patent:
**25.05.2011 Bulletin 2011/21**

(51) Int Cl.:
***B60W 30/08*** *(2006.01)*

(21) Application number: **08150782.4**

(22) Date of filing: **29.01.2008**

(54) **A system for collision course prediction**

System zur Vorhersage eines Kollisionskurses

Système pour la prédiction de la trajectoire de collision

(84) Designated Contracting States:
**DE GB SE**

(43) Date of publication of application:
**05.08.2009 Bulletin 2009/32**

(73) Proprietor: **Ford Global Technologies, LLC**
**Dearborn, MI 48126 (US)**

(72) Inventors:
• **Eidehall, Andreas**
**414 65 Göteborg (SE)**
• **Pohl, Jochen**
**4876 Grimstad (NO)**

• **Olsson, Claes**
**411 05 Göteborg (SE)**

(74) Representative: **Ekström, Nils**
**Albihns.Zacco**
**Torggatan 8**
**Box 142**
**401 22 Göteborg (SE)**

(56) References cited:
**EP-A- 1 661 751     WO-A-2005/037592**
**DE-A1- 10 307 169     US-A1- 2003 106 732**
**US-A1- 2007 150 196**

**Description**

TECHNICAL FIELD

The invention relates to a system for collision course prediction which assesses the relative movement between a host vehicle and a target vehicle and determines whether the target vehicle will collide with the host vehicle or not. The invention also relates to a lane exit assistance system which is arranged to assess the risk for a host vehicle to leave a current lane and enter into a neighbouring lane and to generate an intervention in the event the host vehicle is to leave said current lane and enter into said neighbouring lane, where the lane exit assistance system includes a system for collision course prediction according to the invention.

BACKGROUND ART

In recent years, safety has been improved by employing passive safety features in automobiles; such passive safety features include, for example, seatbelts, and crumple zones operable to absorb kinetic energy during impact events. Moreover, safety has been further enhanced by employing active safety devices, for example, various types of air-bags. More recently, there has been interest for intelligent sensor safety systems for inclusion in automobiles, such intelligent sensor safety systems being operable to sense road conditions external to such automobiles and to apply automatically crash avoidance or crash mitigation measures when potential collision events are identified by analyzing the sensed road conditions.

A general technical problem encountered with such intelligent sensor safety systems is reliability of potential collision event detection. An incorrect analysis of road conditions can result in such a sensor safety system taking inappropriate action resulting in potentially a hazardous situation. In consequence, automobile manufacturers have been inclined to design intelligent sensor safety systems, for example active steering and braking safety systems, so that they are operable to intervene when there is little or no doubt regarding status of road conditions representing hazardous situations. However, such a cautious approach creates difficulties in that such intervention is potentially applied too late in many situations to avoid serious damage or injury from occurring.

In a published United States patent no. US 6, 873, 286, there is described a motor vehicle driving aid system. The system comprises detector devices operable to provide electrical signals indicative of a relative distance and relative speed of a motor vehicle with respect to a fixed or moving obstacle ahead thereof. The system further includes a processing and control unit coupled to the detector devices to receive detection signals there from, and also connected to brake actuators for outputting braking instructions thereto. In operation, the processing and control unit is arranged to activate the brake actuators to apply automatic emergency braking to the motor vehicle when the relative distance $d_R$ between the motor vehicle and an obstacle present ahead of the vehicle lies between a first predetermined limit value $d_F$ and a pre-selected intermediate value $d_E$. The first value $d_F$ corresponds to a minimum distance at which it is still possible to avoid a collision by braking.

The distance $d_E$ also represents a distance wherein, when less than the value $d_F$, it is no longer possible to avoid a collision event of the motor vehicle only by braking, thus requiring a lateral obstacle avoidance maneuver to be performed. Actuation of an obstacle avoidance maneuver is controlled in the motor vehicle by a steering actuator, for example an electric motor, coupled to a steering column of the vehicle; the steering actuator is controlled from a steering control unit. The control unit is operable to activate an obstacle avoidance function in an event that invoking the function is capable of avoiding a collision event from occurring.

The driving aid system is described as including a frontal microwave radar apparatus for sensing an obstacle in a path of travel of the vehicle. The microwave radar is arranged to perform a scanning function and, in particular, to generate a signal indicative of a relative speed $V_R$ and the relative distance $d_R$ between the motor vehicle and a potential object ahead thereof. The driving aid system also includes at least one video camera directed to an area ahead of the motor vehicle, and a series of lateral short-range radar systems and a pair of video cameras for monitoring rear-side areas of the vehicle, these rear-side areas being known as "blind spots". An option of employing lidar, namely "light direction and ranging", for obstacle detection is also disclosed.

The system is provided with a comprehensive set of sensors and complex signal processing apparatus in order to provide enhanced reliability of obstacle detection; such reliability is paramount when the system is operable to function automatically and potentially override control applied by a driver of the motor vehicle. However, despite such precautions to seek to achieve a high reliability of obstacle detection, there is still a risk of system malfunction or incorrect object detection which can potentially place lives of occupants of the motor vehicle in jeopardy.

It is envisaged that automobile manufacturer will provide in their future manufactured automobiles forward collision warning (FCW) and forward collision mitigation (FCM) systems. Such FCW and FCM systems employ microwave radar or lidar sensors to measure in operation distances and velocities of leading vehicles or similar types of object which could represent crash threats. Moreover, such systems are expected to include computing hardware operable to execute decision algorithms for determining whether or not leading vehicles or objects represent a threat and initiate autonomous braking. Sensor arrangements such as cameras and wide-angle radars in combination with electric power assisted steering (EPAS) and associated data processing systems are capable of potentially providing collision avoidance by autonomous steering intervention. Moreover, algorithms for executing decisions regarding steering are anticipated to be more complex than corresponding algorithms for executing autonomous braking. Algorithms for executing decisions regarding steering are capable of either resulting in a collision when functioning incorrectly or avoiding a collision when functioning correctly, whereas braking systems are capable of generally mitigating collisions. Thus, incorrect autonomous decisions on steering are more potentially dangerous than incorrect autonomous decisions regarding braking. Moreover, it is envisaged that a maximum steering force required in autonomous crash avoidance will not be limited by physical vehicle characteristics but defined by customer requirements or legal regulations.

In a published United States patent application no. US 2005/0090955, there are described methods of performing threat assessment of objects for vehicles. The methods involve determining kinematics of the vehicles and of the objects. Moreover, the methods include computing brake threat numbers (*BTNs*) and steering threat numbers (*STNs*). For example, a threat assessment system operable to execute the methods comprises at least one object detection sensor for generating at least one object detection signal, and a controller coupled to the at least one object detection sensor. The controller is operable to compute a braking threat number (*BTN*) and a steering threat number (*STN*) in response to processing the at least one object detection signal. Moreover, the controller is operable to determine a threat of the at least one object in response to the braking threat number (*BTN*) and the steering threat number (*STN*).

US2003/106732 relates to an automatic brake system. The system determines whether a collision, is avoidable by means of steering and braking, or not. The brake force is adjusted to the result. A time Ty for carrying out a lateral movement Y Is determined (see paragraph [0061]). An estimated time d/Vr until a collision and the needed time Ty for avoiding a collision are compared, and it is determined whether it is possible to avoid a collision by means of steering.

EP 1661751 relates to a driving intention estimation system. The driving intention estimator uses the lateral distance between a host vehicle and a target vehicle, and the lateral acceleration of the host vehicle.

Even though systems for collision course prediction exists in prior art, there still is a need to further improve such systems.

Thus, the present invention is concerned with a technical problem of providing advanced steering safety systems which are operable to provide more reliable steering intervention in potential collision situations.

DISCLOSURE OF INVENTION

The object of the invention is to provide system for collision course prediction which do not require large computer processing capacity and which separates between objects that may or may not collide with the host vehicle with a good accuracy. The object of the invention is achieved by means of a system for collision course prediction according to claim 1 and a lane exit assistance system according to claim 6.

This object is achieved by a system for collision course prediction including:

-    a sensor system (18) arranged on a host vehicle (20), the sensor system (18) being arranged to receive input data relating to a target vehicle external to said host vehicle (20), said target vehicle being positioned within a detecting range (34) of the sensor system (18), wherein an object position (x,y), and an object velocity ($\dot{x},\dot{y}$) relative to the host vehicle are associated with the target vehicle, said input data defining a current state of the target vehicle;

-    a time to collision estimator control block, which calculates an estimated time to collision $T_{ttc}$ based on a longitudinal distance (x), longitudinal velocity ($\dot{x}$) and longitudinal acceleration ($\ddot{x}$) of the target vehicle relative to the host vehicle,

-    a lateral distance estimator control block, which estimates the lateral distance (y) between the centres of the host vehicle and target vehicle at the estimated time to collision $T_{ttc}$.

The sensor system measures the position of a target vehicle and the relative velocity of the target vehicle in relation to the host vehicle. The sensor system may furthermore measure the object acceleration ($\ddot{x}$, $\ddot{y}$), in particular the lateral acceleration ($\ddot{y}$) of the target vehicle relative to the host vehicle. In stead of measuring the object acceleration ($\ddot{x}$, $\ddot{y}$), in particular the lateral acceleration ($\ddot{y}$) of the target vehicle relative to the host vehicle, the object acceleration may be estimated from measurements of the target vehicle velocity.

The time to collision estimator control block calculates an estimated time to collision in a straight forward deterministic way from a longitudinal distance (x), longitudinal velocity ($\dot{x}$) and longitudinal acceleration ($\ddot{x}$) of the target vehicle relative to the host vehicle. In a most straight forward embodiment, the time to collision $T_{ttc}$ is calculated from the equation

$$x(t) + \dot{x}(t) \cdot T_{ttc} + \frac{\ddot{x}(t) \cdot T_{ttc}^2}{2} = 0$$

where x(t) is the longitudinal distance to the target vehicle at the time of estimating the time to collision $T_{ttc}$, $\dot{x}(t)$ is the relative longitudinal velocity of the target vehicle relative to the host vehicle at the time of estimating the time to collision $T_{ttc}$, and $\ddot{x}(t)$ is the relative longitudinal acceleration of the target vehicle relative to the host vehicle at the time of estimating the time to collision $T_{ttc}$. An instantaneous time to collision can be calculated by solving the equation for the time to collision where the longitudinal distance and longitudinal relative velocity are measured indata at the time of estimation t, and the relative longitudinal acceleration may be estimated in a Kalman process in a conventional manner. It has to be observed that for calculating the estimated time to collision, it is not necessary to establish the shape of the road and to predict the future paths of the target and/or host vehicle, which is suggested in many collision prevention systems. Such predictions requires large computer processing capacity.

The system for collision course prediction further includes a lateral distance estimator control block, which estimates the lateral distance ($y(T_{ttc})$) between the centres of the host vehicle and target vehicle at the estimated time to collision. The lateral distance $y(t, T_{ttc})$ at the time to collision $T_{ttc}$ is estimated from the measured lateral position y(t) at the time of estimation (t), the measured lateral velocity $\dot{y}(t)$ at the time of estimation (t) and the lateral acceleration $\ddot{y}$ at the time of estimation according to the following equation:

$$y(t, T_{ttc}) = \dot{y}(t) \, ' \, T_{ttc} + \frac{\ddot{y}(t) \cdot T_{ttc}^2}{2} + y(t)$$

The lateral distance, lateral velocity and lateral acceleration may be determined at a single point in time which constitutes a time for estimation as input data from the sensor system, or alternatively the lateral distance, lateral velocity and lateral acceleration may be determined in a continuous filter process.

The system for collision course prediction furthermore includes a collision course condition determination unit, which is arranged to determine, at an determination instant t prior to the estimated time to collision $T_{ttc}$, whether the target vehicle will collide with the host vehicle or not dependent on if said lateral distance is within or outside a first interval, wherein the magnitude of said first interval is being based on the lateral extension of the host vehicle, the lateral extension of the target vehicle and a correction term Z2 being dependent on a distance to the target vehicle from the host vehicle at said determination instant t.

By adding a correction term dependent on the distance to the target from the host vehicle at the determination instant t, target angle measurement noise is taken into account. The correction term Z2 depends on the range and may depend on characteristics of a filter used to estimate y(t) and derivatives thereof. The filter used to estimate y(t) and the derivatives thereof is preferably arranged as a Kalman filter for y, $\dot{y}$, and $\ddot{y}$.

The target angle is defined as an angle between the heading direction of the host vehicle and the location of the target vehicle. The lateral distance at the time of estimation t, may be determined a y(t) = r sinα(t), where α(t) is the target angle at the time of estimation t., and r is the distance to the target vehicle.

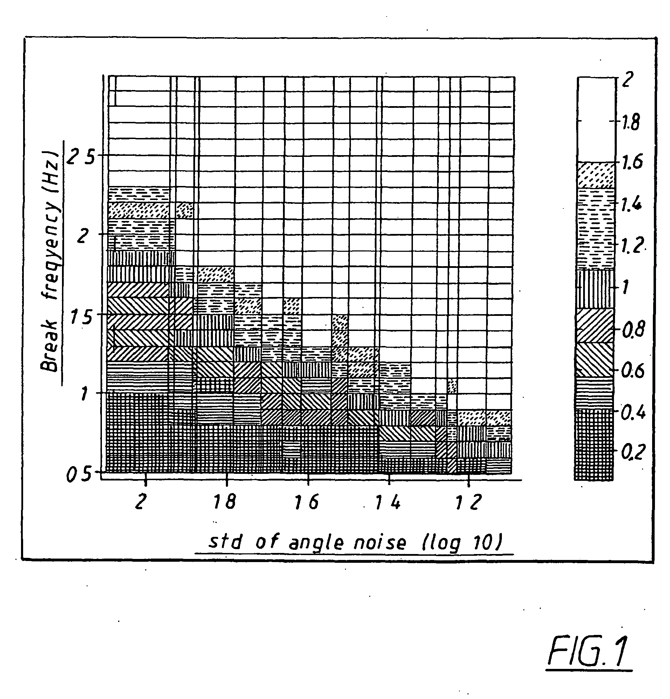

From a graph as shown in figure 1 appropriate settings of a coefficient k in the equation

$$Z2 = Z0 + k^*r,$$

where Z0 is a constant and r is the distance to the target vehicle can be set.

In the diagram the break frequency of the sensor used to determine the target angle is positioned on the ordinate, and the logarithm value of standard deviation of the angle noise is positioned on the abscissa. The values in the field indicated the magnitude of Z2 fora specific distance. Hence for a sensor having a given value of standard deviation of the angle noise an appropriate magnitude of the term Z2 may be set. The diagram is generated by simulation of a filter used to estimate $y(t; t_{TTC})$

Input data $\begin{pmatrix} R \\ \alpha \end{pmatrix}$, where R is the distance to the target vehicle, and α is the angle to the target vehicle is transformed into a lateral distance y by the transform y= R cos α.

A state feedback observer in the following form is used:

$$\hat{y}(t+1) = A\hat{y}(t) + K(t)\big[y(t) - C\hat{y}(t)\big],$$

where $\hat{y}$ is a state vector $\begin{pmatrix} y \\ \dot{y} \\ \ddot{y} \end{pmatrix}$ including the lateral position, lateral velocity and lateral acceleration.

K(t) is computed as:

$$P(t) = AP(t-1)A' + Q$$

$$S(t) = CP(t)C' + R$$

$$K(t) = P(t)C'inv((S(t)),$$

and

$$P(t+1) = P(t) - K(t)SK(t)'$$

The model is defined by $A = \begin{pmatrix} 1 & T & T^2/2 \\ 0 & 1 & T \\ 0 & 0 & 1 \end{pmatrix}$, $C = (1\ 0\ 0)$

Here T is the sample interval.

The parameters Q and R are considered to be design parameters, an exaple of choice can be

$Q = \begin{pmatrix} 0,3 & 0 & 0 \\ 0 & 1 & 0 \\ 0 & 0 & 0,1 \end{pmatrix}$ and R = 1.

Furthermore Q and R can be scaled to obtain the requested bandwidth, i.e. the noise suppression versus speed trade off. X(t) is initialised accordning to the first measurement. The initialisation of P8t) is also a design parameter.

An example of a starting value can be $P_o = \begin{pmatrix} 1 & 0 & 0 \\ 0 & 100 & 0 \\ 0 & 0 & 1,0 \end{pmatrix}$

Hence by selection of different Q and R for sensors having different standard of deviation for angle noise, the diagram of figure 1 can be obtained.

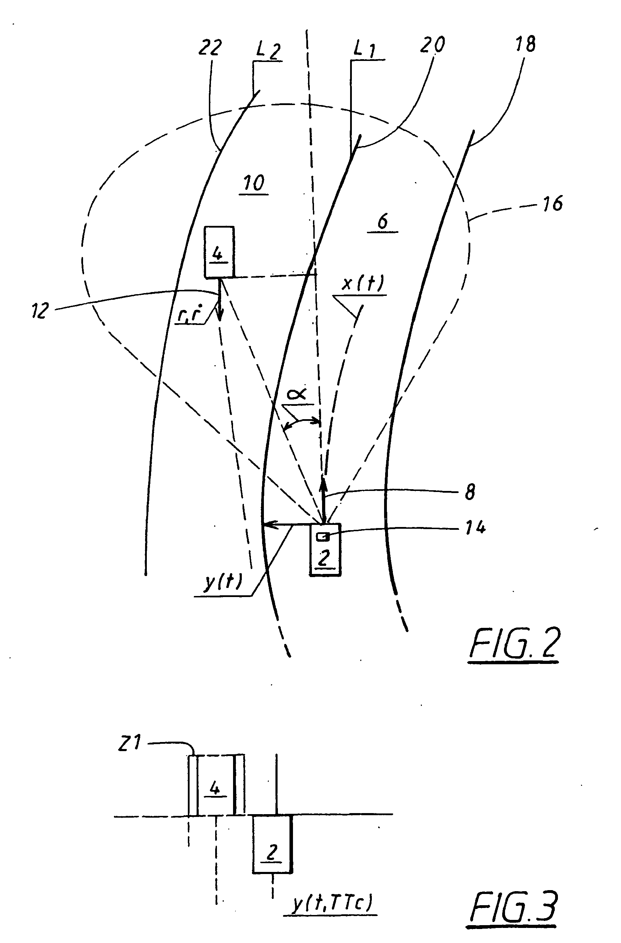

An estimate $y(t,T_{ttc})$ is calculated by use of the estimated state vector $\hat{y}$ above mentioned state feedback observer as $y(t,T_{ttc}) = y(t) + \dot{y}(t)*T_{ttc} + \ddot{y}(t)*T_{ttc}^2$. A value of y(t,Tttc) is calculated analytically from a starting distance, simulating an ideal sensor with no noise. The difference between those two measures constitutes a value of Z2 for a specific standard of angle noise and a specific break frequency for the observer given by Q and R. In order to form the diagram in figure 2, this calculation is performed a large number of times for each selection of Q and R and the given standard deviation of angle noise for the sensor, and a mean value is formed and entered into the diagram

The diagram shows the magnitude of the term Z2 at a specified distance (100m) as a function of the break frequency of the Kalman frequency and a given standard deviation of angle noise of the sensor detecting the object. The standard deviation of sensor detecting the object is a hardware parameter, while the break frequency is dependent on the design of the filter in a conventional manner. Hence, the simulation enables a person skilled in the art to select an appropriate sensor having a sufficient low standard deviation of angle noise for a specific filter in order to obtain a desired value of the term Z2, or enables to set a correct value to the term Z2 for a given filter and sensor.

In an embodiment of the invention, the collision course condition determination unit further is arranged to determine whether the target vehicle will collide with the host vehicle or not dependent on whether said estimated time to collision $T_{ttc}$ is within a time interval $T_{LC1} < T_{ttc} < T_{LC2}$, where $T_{LC1}$ is an estimated time for the host vehicle to enter the lane of the target vehicle and $T_{LC2}$ is an estimated time for the host vehicle to leave the lane of the target vehicle. By the condition it is ensured that the host vehicle will leave the current lane into the neighbouring lane where the target vehicle is situated before the estimated time of collision. The condition furthermore stipulates that the host vehicle should not leave the neighbouring lane before the estimated time to collision.

The system for collision course prediction according to the invention may furthermore be part of a lane exit assistance system which is arranged to assess the risk for a host vehicle to leave a current lane and enter into a neighbouring lane and to generate an intervention in the event the host vehicle is to leave said current lane and enter into said neighbouring lane. The lane exit assistance system includes the following features:

- a steering torque condition function block assessing whether a steering torque required to avoid a potential collision in said neighbouring lane is within a range,
- host lane threat condition functional block which is arranged at assess whether a required braking force to avoid an obstacle in said current lane is below a threshold value,
- a timing condition functional block which is arranged to determine whether an estimated time to collision is below a threshold value, and
- a system for collision course prediction according to what is defined above.

The steering torque condition function block determines whether the required torque $T_{req}$ to avoid a collision with the target vehicle is above a minimum level $T_{min}$ and whether said required torque $T_{req}$ is below a maximum level $T_{max}$. The minimum level is selected to ensure that an intervention is made as late as possible, while still maintaining a safety margin. The maximum level is set to assure that the steering wheel torque superposed by an intervention controller will not exceed limitations with respect to a) legal requirements and b) driver override functionality. With driver override functionality is intended the ability for a driver to regain control over the vehicle by manually overriding the superposed torque by the intervention controller. The driver must thus be able to via the steering wheel apply a torque larger than the maximum torque available from the intervention controller, or interrupt the application of the superimposed torque by applying a torque, having a magnitude exceeding a threshold value in a direction against the superimposed torque. A so applied counter torque will be interpreted as an attempt to override the automatic steering control, thus enabling the driver to perform its intended manoeuvre.

The host lane threat condition functional block is arranged at assess whether a required braking force $B_{req}$ to avoid an obstacle in said current lane is below a threshold value. The threshold value is selected such that sufficient braking force to stop the vehicle is available. A suitable threshold value is set between 0,2 and 0,7g, preferably between 0,2 and 0,5g.

The timing condition functional block is arranged to determine whether an estimated time to collision $T_{ttc}$ is below a threshold value. The threshold is set such that traffic situations that are too distant will not trigger an intervention. The threshold value is suitable selected between 1-3 seconds, preferably between 1,9 - 2,5 seconds.

According to one embodiment, the lane exit assistance system will be arranged to generate an intervention only if all the following conditions are fulfilled:

1) a required braking force $B_{red}$ to avoid an obstacle in said current lane is below a threshold value;

2) an estimated time to collision $T_{ttc}$ is below a threshold value;

3) a required torque $T_{req}$ to avoid a collision with the target vehicle is above a minimum level $T_{min}$ and whether said required torque $T_{req}$ is below a maximum level $T_{max}$; and

4) a collision course condition determination unit have determined, at an determination instant t prior to the estimated time to collision $T_{ttc}$, that the target vehicle will collide with the host vehicle.

The collision course condition determination unit may preferably form part of a system for collision course prediction including:

- a sensor system (18) arranged on a host vehicle (20), said sensor system (18) being arranged to receive input data relating to a target vehicle external to said host vehicle (20), said target vehicle being positioned within a detecting range (34) of said sensor system (18), wherein an object position (x,y), and an object velocity ($\dot{x},\dot{y}$) relative to the host vehicle are associated with the target vehicle, said input data defining a current state of the target vehicle;
- a time to collision estimator control block, which calculates an estimated time to collision $T_{ttc}$ based on a longitudinal distance (x), longitudinal velocity ($\dot{x}$) and longitudinal acceleration ($\ddot{x}$) of the target vehicle relative to the host vehicle,
- a lateral distance estimator control block, which estimates the lateral distance (y) between the centres of the host vehicle and target vehicle at the estimated time to collision $T_{ttc}$; and
- a collision course condition determination unit, which determines, at an determination instant t prior to the estimated time to collision $T_{ttc}$, that the target vehicle will collide with the host vehicle due to that said lateral distance is within a first interval, wherein the magnitude of said first interval is being based on the lateral extension of the host vehicle, the lateral extension of the target vehicle and a correction term Z2 being dependent on a distance to the target vehicle from the host vehicle at said determination instant t.

According to a preferred embodiment, the lane exit assistance system will be arranged to generate an intervention only if all the following conditions are fulfilled:

1) a required braking force $B_{req}$ to avoid an obstacle in said current lane is below a threshold value, which is set between 0,2 and 0,7g, preferably between 0,2 and 0,5g;

2) an estimated time to collision $T_{ttc}$ is below a threshold value, which is between 1 - 3 seconds, preferably between 1,9 - 2,5 seconds;

3) a required torque $T_{req}$ to avoid a collision with the target vehicle is above a minimum level $T_{min}$ and whether said required torque $T_{req}$ is below a maximum level $T_{max}$; and

4) a collision course condition determination unit have determined, at an determination instant t prior to the estimated time to collision $T_{ttc}$, that the target vehicle will collide with the host vehicle.

The collision course condition determination unit may preferably form part of a system for collision course prediction including:

- a sensor system (18) arranged on a host vehicle (20), said sensor system (18) being arranged to receive input data relating to a target vehicle external to said host vehicle (20), said target vehicle being positioned within a detecting range (34) of said sensor system (18), wherein an object position (x,y), and an object velocity ($\dot{x},\dot{y}$) relative to the host vehicle are associated with the target vehicle, said input data defining a current state of the target vehicle;
- a time to collision estimator control block, which calculates an estimated time to collision $T_{ttc}$ based on a longitudinal distance (x), longitudinal velocity ($\dot{x}$) and longitudinal acceleration ($\ddot{x}$) of the target vehicle relative to the host vehicle,
- a lateral distance estimator control block, which estimates the lateral distance (y) between the centres of the host vehicle and target vehicle at the estimated time to collision $T_{ttc}$: and
- a collision course condition determination unit, which determines, at an determination instant t prior to the estimated time to collision $T_{ttc}$, that the target vehicle will collide with the host vehicle due to that said lateral distance is within a first interval, wherein the magnitude of said first interval is being based on the lateral extension of the host vehicle, the lateral extension of the target vehicle and a correction term Z2 being dependent on a distance to the target vehicle from the host vehicle at said determination instant t, where said interval is such that not[y($T_{ttc}$) > (HW/2 + TW/2 + Z1 +Z2) or y($T_{ttc}$) < -(HW/2 + TW/2 + Z1 +Z2)] .

BRIEF DESCRIPTION OF DRAWINGS

In the following embodiments of the invention will be described with references to appended drawings, where

Fig. 1 shows a diagram of the uncertainty of the lateral distance as a function of filter settings and target angle noise characteristics,

Fig. 2 shows a diagram of a traffic scenario including a host and a target vehicle

Fig. 3 shows the traffic situation at the time of collision,

Fig 4 shows a block diagram of a system for collision course prediction,

Fig. 5 shows a block diagram of a lane exit assistance system,

Fig. 6 is a plan-view illustration of the automobile according to the present invention;

Fig. 7 is a plan-view of a section of road, turnpike or highway including an automobile configured to function pursuant to the present invention;

Fig. 8 is a graph illustrating velocity range in which an automating braking system and an automatic steering system included in the automobile of Figure 1 are configured to function;

Fig. 9 is a flow chart of an algorithm executable in a data processing unit of the automatic steering and braking systems of the automobile of Figure 1 for implementing the present invention;

Fig.10 is a first scenario in which the present invention is susceptible to being employed;

Fig. 11 is a second set of scenarios in which the present invention is susceptible to being employed;

Fig. 12 is a third scenario in which the present invention is susceptible to being employed; and

Fig. 13 is a fourth scenario in which the present invention is susceptible to being employed

EMBODIMENT(S) OF THE INVENTION

In figure 2 a traffic situation including a host vehicle 2 and a target vehicle 4 is shown. The host vehicle 2 travels in a current lane 6 in a direction indicated with an arrow 8. The target vehicle 4 travels in a neighbouring lane 10 in a direction indicated by an arrow 12.

A sensor system 14 arranged on the host vehicle 2 receives input data relating to the target vehicle 4 external when the target vehicle 4 is positioned within a detecting range 16 of the sensor system 14. The sensor system is of a conventional type that is capable of detecting at least the position (r,Φ) and a change rate ($\dot{r}$) of the radial distance to the object. From these detected variables, the position (x,y), velocity ($\dot{x},\dot{y}$) and acceleration ($\ddot{x},\ddot{y}$) of the target vehicle 4 relative to the host vehicle 2 may be estimated, suitably in Kalman process, from said detected position (r,Φ) and change rate ($\dot{r}$).

Lane markers 18, 20, 22 separates the current lane 6 of the host vehicle from the neighbouring lane 10 of the target vehicle 4. Knowledge or presence of lane markers is not necessary for operation of the invention in the most general form. In an embodiment of the invention, the sensor system 14 however includes means 26 for detection of lane markers. The means 26 for detection of lane markers, may conventionally be connected to means 28 for determining road coordinates, which preferably are arranged as Kalman filter process which continuously updates an estimation of road coordinates and which determines the position of the host vehicle and external objects such as the target vehicle in a road coordinate system. A suitable systems for performing lane detection and calculation of road coordinates is sold under the trade name of MobilEye. A more extensive explanation of the underlying theory may be found in "An automotive Lane Guidance System." A. Eidehall Thesis no 1122, Linköping Studies in Science and Technology, Linköping 2004.

The relative distance r between the host vehicle 2 and the target vehicle 4 and the relative velocity $\dot{r}$ are detected by the sensor system 14. The lateral distance between the host vehicle 2 and the target vehicle at an determination instant t may be expressed as:

$$y(t) = r(t)\sin\alpha(t),$$

where α(t) is the target angle at the time of estimation.
x(t) denotes the longitudinal distance between the host vehicle and the target vehicle.

$x(t) = r(t)\cos\alpha(t)$

It should be noted that x(t) and y(t) do not refer to road coordinates, but to a coordinate system fixed to the host vehicle having the x axis in the direction of travel of the vehicle and the y axis transversal to the x axis.

In figure 3, the traffic situation at the time of collision is shown. The time of collision is the point in time where the longitudinal distance between the host and target vehicle are zero. A safety zone Z1 may be added to the width of the target vehicle and/or host vehicle for precaution.

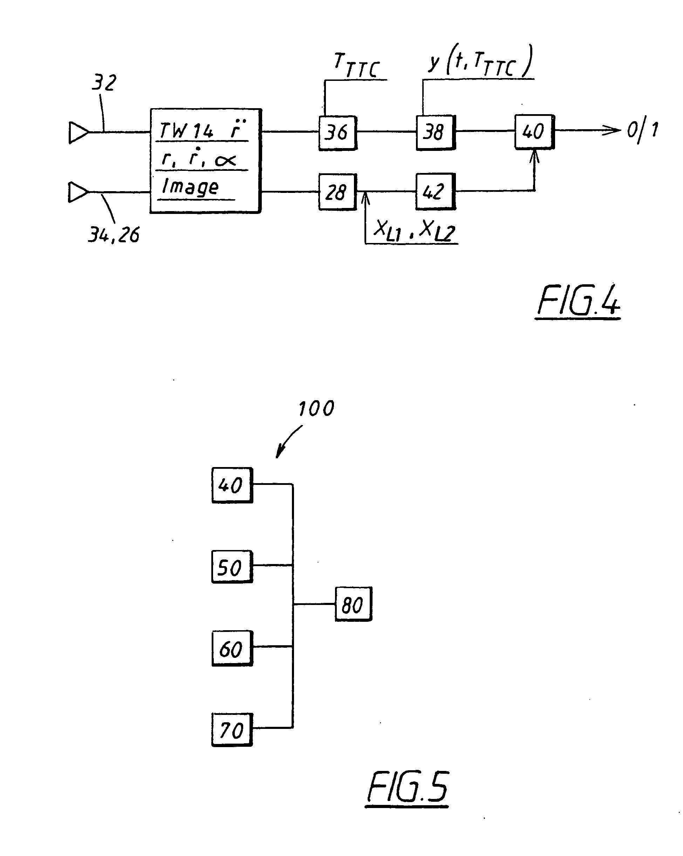

In figure 4 a block diagram of a system 30 for collision course prediction is shown.

The system 30 includes a sensor system arranged on a host vehicle 2. The sensor system 14 is arranged to receive input data relating to a target vehicle 4 external to the host vehicle. The sensor system 14 detects at least an object position (r,Φ) and a change rate of the distance ($\dot{r}$) of a target vehicle relative to the host vehicle. From the object position (r,Φ, an object position( x,y) and an object velocity ($\dot{x},\dot{y}$) of a target vehicle relative to the host vehicle may be determined. For the purpose of determining the object position (r,Φ), and an object velocity ($\dot{r}$) of a target vehicle, conventional sensors such as a radar 32 may be used. The radar 32 detects the relative distance r between the host vehicle 2 and the target vehicle 4 and the relative velocity $\dot{r}$. An object acceleration ($\ddot{x},\ddot{y}$) may be determined in a state update equation in a Kalman processor or calculated from the object velocity. A longitudinal and lateral distance (x,y) and a lateral and longitudinal velocity may be determined from the relative distance and velocity from a target angle $\alpha$ as have been explained above. The target angle $\alpha$ may be determined from the sensor via input from the radar and/or in combination with input from a camera 34 in a conventional manner. The camera 34 may constitute the means 26 for detection of lane markers.. The sensor system may furthermore be connected to means 28 for determining road coordinates, which preferably are arranged as Kalman filter process which continuously updates an estimation of road coordinates and which determines the position of the host vehicle and external objects such as the target vehicle in a road coordinate system. The means for estimation of road coordinates generates a continuous line from detected lane marker such that a coordinate system (x', y') for the shape of the road is generated and the position of the host and detected target vehicles can be located in the coordinate system of the road.

The system 30 furthermore includes a time to collision estimator control block, which calculates an estimated time to collision $T_{ttc}$ based on a longitudinal distance (x), longitudinal velocity ($\dot{x}$) and longitudinal acceleration ($\ddot{x}$) of the target vehicle relative to the host vehicle. The time to collision estimator control block calculates an estimated time to collision in a straight forward deterministic way from a longitudinal distance (x), longitudinal velocity ($\dot{x}$) and longitudinal acceleration ($\ddot{x}$) of the target vehicle relative to the host vehicle. In a most straight forward embodiment, the time to collision $T_{ttc}$ is calculated from the equation

$$x(t) + \dot{x}(t)' \, T_{ttc} + \frac{\ddot{x}(t) \cdot T_{ttc}^2}{2} = 0$$

where x(t) is the longitudinal distance to the target vehicle at the time of estimating the time to collision $T_{ttc}$, $\dot{x}(t)$ is the relative longitudinal velocity of the target vehicle relative to the host vehicle at the time of estimating the time to collision $T_{ttc}$, and $\ddot{x}(t)$ is the relative longitudinal acceleration of the target vehicle relative to the host vehicle at the time of estimating the time to collision Tttc. An instantaneous time to collision can be calculated by solving the equation for the time to collision where the longitudinal distance and longitudinal relative velocity are measured indata at the time of estimation t, and the relative longitudinal acceleration may determined in a state update equation in a Kalman process..

The system 30 furthermore includes a lateral distance estimator control block 38, which estimates the lateral distance (y) between the centres of the host vehicle and target vehicle at the estimated time to collision $T_{ttc}$.

The lateral distance y(t) at the time to collision is estimated from the measured lateral distance at the time of estimation (t), the measured lateral velocity $\dot{y}$ (t) at the time of estimation (t) and the lateral acceleration $\ddot{y}$ at the time of estimation according to the following equation:

$$y(t, T_{ttc}) = \dot{y}(t)' \, T_{ttc} + \frac{\ddot{y}(t) \cdot T_{ttc}^2}{2} + y(t)$$

The lateral distance, lateral velocity and lateral acceleration may be determined at a single point in time which constitutes a time for estimation as input data from the sensor system, or alternatively the lateral distance, lateral velocity and lateral acceleration may be determined in a continuous filter process.

The system also includes a collision course condition determination unit 40, which is arranged to determine, at a determination instant t prior to the estimated time to collision $T_{ttc}$, whether the target vehicle will collide with the host vehicle or not dependent on if said lateral distance is within or outside a first interval, wherein the magnitude of said first interval is being based on the lateral extension of the host vehicle, the lateral extension of the target vehicle and a correction term Z2 being dependent on a distance to the target vehicle from the host vehicle at said determination instant t.

The collision course determination unit 40 determines that the host vehicle will collide with the target vehicle if the following condition is fulfilled:

not$[y(T_{ttc}) > (HW/2 + TW/2 + Z1 + Z2)$ or $y(T_{ttc}) < -(HW/2 + TW/2 + Z1 + Z2)]$ ., where HW is the width of the host vehicle, TW is the width of the target vehicle, Z1 is a safety margin, which may be set to zero, be of a predetermined positive magnitude or be dependent on the width of the target vehicle. The width of the host vehicle is known. The width of the target vehicle is determined by the target vehicle, from the input of the radar and/or camera in a conventional manner.

By adding a correction term dependent on the distance to the target from the host vehicle at the determination instant t, target angle measurement noise is taken into account. The correction term Z2 depends on the range and may depend on characteristics of a filter used to estimate y(t) and derivatives thereof. The filter used to estimate y(t) and the derivatives thereof is preferably arranged as a Kalman filter for y, $\dot{y}$, and $\ddot{y}$.

The target angle is defined as an angle between the heading direction of the host vehicle and the location of the target vehicle. The lateral distance at the time of estimation t, may be determined a $y(t) = r \sin\alpha(t)$, where $\alpha(t)$ is the target angle at the time of estimation t., and r is the distance to the target vehicle.

From a graph as shown in figure 1 appropriate settings of a coefficient k in the equation

$$Z2 = Z0 + k^*r,$$

where Z0 is a constant and r is the distance to the target vehicle can be set.

The collision course determination unit 40 generates an output representing that the host vehicle 2 may collide wit the target vehicle 4 and another output representing that the host vehicle 2 will not collide wit the target vehicle 4. The output can be represented by a high or a low signal, a digital 0 or 1 signal or any other form representing the two different scenarios. Here 1 will mean that host and target vehicle have a course that may lead to a collision.

Optionally, the system 30 includes a host vehicle in neighbouring lane control block 42. The host vehicle in neighbouring lane control block 42 determines if the host vehicle 2 will enter the neighbouring lane 10 in which the target vehicle is present. This is done by observing the location of the lane markers defining the lanes $L_1$ and $L_2$ represented by reference numbers 20 and 22 by the camera 34. The distance to the lane markers $X_{L1}$ and $X_{L2}$ is determined in means 28 for determining road coordinates. The time to lane crossing $T_{LC1}$, $T_{LC2}$, of the first and second lanes defining the neighbouring lane may be determined in a straight forward manner from knowledge of the current speed of the host vehicle. Alternatively the time to lane crossing can be determined by use of a Kalman filter.

In that case the collision course determination unit 40 determines that the host vehicle will collide with the target vehicle if the following condition is fulfilled:

$$\text{not}[y(T_{ttc}) > (HW/2 + TW/2 + Z1 + Z2) \text{ or } y(T_{ttc}) < -(HW/2 + TW/2 + Z1 + Z2)]$$

and the estimated time to collision $T_{ttc}$ is within a time interval $T_{LC1} < T_{ttc} < T_{LC2}$.

In figure 5 a block diagram of a lane exit assistance system 100 is shown. The lane exit assistance system 100 includes

A steering torque condition function block 50 for assessing whether a steering torque required to avoid a potential collision in said neighbouring lane is within a range. The steering torque condition function block determines whether the required torque $T_{req}$ to avoid a collision with the target vehicle is above a minimum level $T_{min}$ and whether said required torque $T_{req}$ is below a maximum level $T_{max}$. The minimum level is selected to ensure that an intervention is made as late as possible, while still maintaining a safety margin. The maximum level is set to assure that the steering wheel torque superposed by an intervention controller will not exceed limitations with respect to a) legal requirements and b) driver override functionality. With driver override functionality is intended the ability for a driver to regain control over the vehicle by manually overriding the superposed torque by the intervention controller. The driver must thus be able to via the steering wheel apply a torque larger than the maximum torque available from the intervention controller.

The lane exit assistance system furthermore includes a host lane threat condition functional block 60 which is arranged at assess whether a required braking force to avoid an obstacle in said current lane is below a threshold value.

The host lane threat condition functional block is arranged at assess whether a required braking force $B_{req}$ to avoid an obstacle in said current lane is below a threshold value. The threshold value is selected such that sufficient braking force to stop the vehicle is available. A suitable threshold value is set between 0,2 and 0,7g, preferably between 0,2 and 0,5g.

The lane exit assistance system 100 furthermore includes a timing condition functional block 70 which is arranged to determine whether an estimated time to collision is below a threshold value.

The timing condition functional block is arranged to determine whether an estimated time to collision $T_{ttc}$ is below a threshold value. The threshold is set such that traffic situations that are too distant will not trigger an intervention. The threshold value is suitable selected between 1-3 seconds, preferably between 1,9 - 2,5 seconds.

The lane exit assistance system 100 also includes a system for collision course prediction 40 as have been explained in detail above.

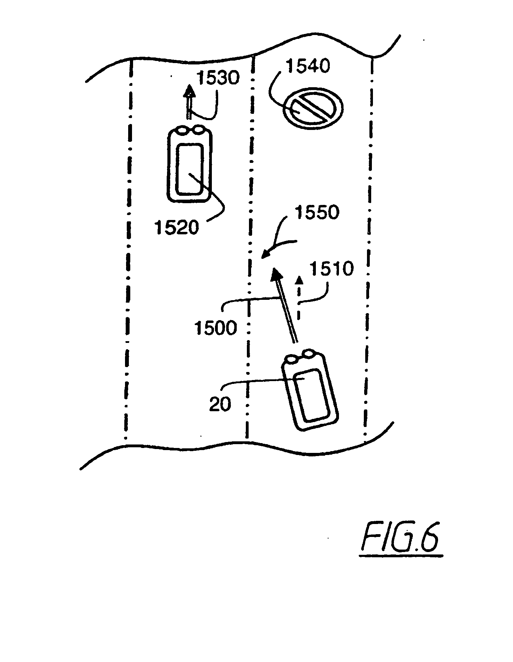

A lane exit assistant system will be described in further detail below with references to figures 6-13.

According to a first aspect of the present lane exit assistant system there is provided a steering safety system operable to apply a steering torque to a steering arrangement of an automobile in response to a potential collision event involving one or more potentially hazardous objects being identified, the system including:

(a) a sensor arrangement (30) operable to interrogate a sensing region (40) external to the automobile (20) and generate corresponding sensor signals; and

(b) a processing arrangement (60) operable to receive the sensor signals and to compute positions and relative velocities of said one or more potentially hazardous objects (230) in the sensing region (40) there from, and to compute a value representative of a steering torque required to be applied to steer said automobile (20) in a direction to avoid said hazardous objects, to retrieve a value representative of maximum torque available to steer said automobile (20) in said direction, and to compare the value representative of the maximum torque available with the value representative of the steering torque required to avoid said hazardous object, and to decide how to intervene in response to said comparison.

The lane exit assistant system is of advantage in that computation of the required steering torque in the processing arrangement in response to receiving the sensor signals and comparing the required steering torque with a retrieved value representative of maximum torque available to steer said automobile (20) in said direction is susceptible to improving reliability of steering intervention in response to a potential collision event. In particular, by comparing a value representative of the required steering torque with a value representative of a maximum torque available, a very adequate measure for deciding whether intervention should be allowed or nor, and for, in the event intervention is allowed, timing of intervention, is obtained.

In order to obtain increased safety by use of active steering safety systems, which are designed to apply additional steering torque under certain traffic situations in order to avoid or reduce the risk for collisions, it is important to intervene by application of steering torque in a correct manner. Too early application of steering torque will result in a vehicle having an unreliable running characteristic, while too late application will lead to jerky behaviour or possibly that accidents can not be avoided. Furthermore, it is of importance not to intervene in the event intervention will not lead to avoidance of a collision, since under such circumstances it is safer to !et the driver have complete control of the vehicle without any intervention by application of additional steering torque.

By comparing a measure of a value representative of a maximum torque available $T_{MAx}$ with a value representative of a required steering torque Ts, which if applied would ensure avoidance of a collision a suitable measure for decisions regarding intervention by the steering safety system is obtained. The comparison is preferably made by forming a ratio STN of a calculated value indicating the required steering torque with a retrieved value indicating the maximum torque available, that is $STN = T_S/T_{MAX}$. The comparison of the values representative of the maximum steering torque and the steering torque may be formed by other representations of these torques than the formation of a linear quota $STN = Ts_{ITMAX}$. Examples of other suitable representations of the torques may be the square of the torques $(T_S/T_{MAX})^2$, the square root of the torques $(Ts/T_{MAX})^{1/2}$ or any other functions f,g of the torques $(f(Ts)/g(T_{MAX}))$ which allows for estimation of the relative magnitude of the maximum torque available with the steering torque required. A requirement of the functions f and g are that they do not contain any singular points and that they are smooth functions in a relevant interval for the torques. Furthermore they must both be continuously increasing or both continuously decreasing in the relevant interval of the torques.

The steering torque required to avoid the hazardous objects may be calculated in accordance with known principles, as are explained in for instance Wong, J.Y., Theory of ground vehicles (1993), John Wiley & Sons, Inc.

The maximum available steering torque may be retrieved from a memory cell, a map stored in the processing arrangement or calculated. The maximum available steering torque, may be a limit set by legal requirement that additional steering torque applied by safety systems should not exceed a certain limit. The maximum available steering torque, may alternatively be a limit corresponding to the maximum torque output from a servo motor. Alternatively, the maximum available steering torque may be selected such that a standard driver should always be capable of overriding the steering torque applied. Sensor arrangements may be provided such that an adaptable upper limit is set, which adaptable upper limit is dependent on the action taken by the driver under the event. The sensor arrangement may typically be aware of whether the driver is steering in the opposite direction of the applied torque or not.

In preferred embodiments of the lane exit assistant system, the steering safety system may include the following further features, alone or in combination as is evident from the dependent claims:

o the steering safety system may be arranged to not apply any additional steering torque in the event said steering torque required exceeds said maximum torque available to avoid said hazardous object;

o the steering safety system may be arranged to compute a ratio value representative of a ratio of said required steering torque to said maximum torque available.

o the steering safety system may be arranged to not apply any steering torque in the event said ratio value is below a first threshold value;

o the steering safety system may be arranged to intervene in the event said ratio value is above a first threshold value, and /or

o the steering safety system may be arranged to intervene by applying a steering torque in order to avoid said hazardous objects.

In preferred embodiments of the lane exit assistant system intervention is made by application of a steering torque by the steering safety system when the ratio STN of a calculated value indicating the required steering torque with a retrieved value indicating the maximum torque available exceeds a first threshold level, that is STN = $(Ts/T_{MAX})$ > T1. No intervention is made if the ratio is below this first threshold value or if the required steering torque exceeds the maximum torque available. The first threshold value is suitable selected between 0,6 and 0,95, preferably between 0,75 and 0,90.

In an other embodiment the steering safety system may furthermore include:

(bl) a processing arrangement operable to receive the sensor signals and to compute positions and relative velocities of the one or more potentially hazardous objects in the sensing region there from, and to compute there from a relatively safest direction ($F_{lane}$) along which the automobile is capable of travelling in operation to try to avoid the one or more potentially hazardous objects, to compute a steering torque required to be applied to steer the automobile in the safest direction ($F_{lane}$), to compute a maximum torque available to steer the automobile in the safest direction ($F_{lane}$) to compute a ratio value representative of a ratio of the required steering torque to the maximum torque available, and to compute whether or not to intervene to apply the steering torque to steer the automobile in the safest direction ($F_{lane}$) in response to the ratio value.

As an example, the safest direction may be selection between avoiding a potentially hazardous object by turning left or turning right in order to pass the object on different sides of the vehicle. The selection may be based on assigning threat levels on the respective side of the potentially hazardous object. The treat levels may be assessed by consideration of future trajectories of the hazardous objects.

In such an embodiment the steering safety system, the processing arrangement is operable to compute future trajectories of the one or more potentially hazardous objects potentially obstructing said safest direction ($F_{lane}$), the processing arrangement being operable to apply via the steering arrangement the steering torque in the potential collision event to steer a direction of travel of the automobile towards the safest direction ($F_{lane}$). The system is thereby capable of applying a steering torque to avoid an immediate potential collision event and also a future evolving potential collision event.

Preferably, in the steering safety system, the sensor arrangement comprises a first sensor assembly operable to emit radiation towards the sensing region and receive corresponding reflected radiation there from, and a second sensor assembly operable to image the sensing region, the processing arrangement being operable to associate sensed signals corresponding to the one or more potentially hazardous objects received from the first and second sensor assemblies and to associate a hazard risk for each of the one or more potentially hazardous objects, wherein the processing arrangement is operable to compute a portion of the safest direction ($F_{lane}$) which is potentially unobstructed as a function of the hazard risks of the one or more potentially hazardous objects. Computation of collision hazard represented by each of the one or more potentially hazardous objects is capable of enabling a most appropriate safest direction ($F_{lane}$) to be selected by the system for reducing or avoiding collision damage.

Preferably, the steering safety system is operable when the automobile is travelling at a velocity greater than a first threshold velocity. Such a first threshold enables automatic braking to be employed as a sole measure of autonomous crash mitigation or avoidance at lower speeds.

Preferably, in the steering safety system, the processing arrangement is operable to limit the steering force to an upper limit, the upper limit being less than a torque applicable by a driver of the automobile such that the driver is capable of overriding the steering torque applied by the system when in operation. Limiting the torque that the system is capable of providing enabling the driver to override the system in a very rare event that the system has misinterpreted a road situation present in the sensing region, thereby improving driver safety.

According to a second aspect of the lane exit assistant system, there is provided a method of applying in a steering safety system a steering torque to a steering arrangement of an automobile in response to a potential collision event involving one or more potentially hazardous objects being identified, the method including steps of:

(a) interrogating using a sensor arrangement (30) a sensing region (40) external to the automobile (20) and generating corresponding sensor signals

(b) receiving in a processing arrangement (60) the sensor signals and computing positions and relative velocities of one or more potentially hazardous objects (230) in the sensing region (40) there from,

(c) computing a steering torque required to be applied to steer said automobile (20) in a direction to avoid said hazardous objects;

(d) computing a maximum torque available to steer said automobile (20) in said direction;

(e) comparing the value representative of the maximum torque available with the value representative of the steering torque required to avoid said hazardous object,

(f) and deciding how to intervene in response to said comparison.

In further preferred embodiments, the following additional method steps may be performed alone or in combinations which are evident from the dependent claims:

- said steering safety system may be prevented from applying steering torque in the event said steering torque required exceeds said maximum torque available to avoid said hazardous object;

- said steering safety may compute a ratio value representative of a ratio of said required steering torque to said maximum torque available;

- said steering safety system may be prevented from applying steering torque in the event said ratio value is below a first threshold value;

- said steering safety may intervene in the event said ratio value is above a first threshold value; and/or

- said steering safety system may intervene by applying a steering torque in order to avoid said hazardous objects.

In another embodiment, the following method steps are performed:

a) interrogating using a sensor arrangement a sensing region external to the automobile and generating corresponding sensor signals;

b) receiving in a processing arrangement the sensor signals and computing positions and relative velocities of the one or more potentially hazardous objects in the sensing region there from, and computing there from a relatively safest direction ($F_{lane}$) in which the automobile is capable of travelling in operation with minimal risk of collision;

c) computing a steering torque required to be applied to steer the automobile in the safest direction ($F_{lane}$);

d) computing a maximum torque available to steer the automobile in the safest direction ($F_{lane}$);

e) computing a ratio value representative of a ratio of the required steering torque to the maximum torque available;

and

f) computing whether or not to intervene to apply the steering torque to steer the automobile in the safest direction ($F_{lane}$) in response to the ratio value.

Preferably, the method in step (a) includes steps of:

a1) emitting from a first sensor assembly of the sensor arrangement radiation towards the sensing region and receiving corresponding reflected radiation there from, and

a2) imaging from a second sensor assembly of the sensor arrangement the sensing region,

and wherein the method in step (b) includes steps of:

b1) associating in the processing arrangement sensed signals corresponding to the one or more potentially hazardous objects received from the first and second sensor assemblies, and associating a hazard risk (K) for each of the one or more potentially hazardous objects, and

b2) computing in the processing arrangement the portion of the safest direction ($F_{lane}$) which is potentially unobstructed as a function of the hazard risks of the one or more potentially hazardous objects.

According to a third aspect of the lane exit assistant system, there is provided a software product on a data carrier, the software product being executable on computing hardware to implement :the method according to the second aspect of the lane exit assistant system.

According to a fourth aspect of the lane exit assistant system, there is provided an automobile including a steering safety system according to the first aspect of the lane exit assistant system.

The expression "automobile" is to be construed to include: personal motor vehicles, cars, fans, trucks, lorries, buses, motorcycles, scooters and any other type of propelled road vehicle.

In Figures 6 to 13, numerals are included to identify features in conjunction with the following description of embodiments of the lane exit assistant system. The numerals are included underlined when spatially positioned within features to which they relate. Moreover, the numerals when not underlined are linked by lines which identify features to which the numerals relate. Furthermore, numerals are linked by arrows when they are used to indicate a complete component part or system.

## Description of embodiments of the lane exit assistant system

In overview, the present lane exit assistant system employs forward collision warning (FCW) and forward collision mitigation (FCM). Moreover, the present lane exit assistant system is operable to employ a decision algorithm implemented either in dedicated hardware, as software executable on computing hardware, or a mixture of such hardware and software.

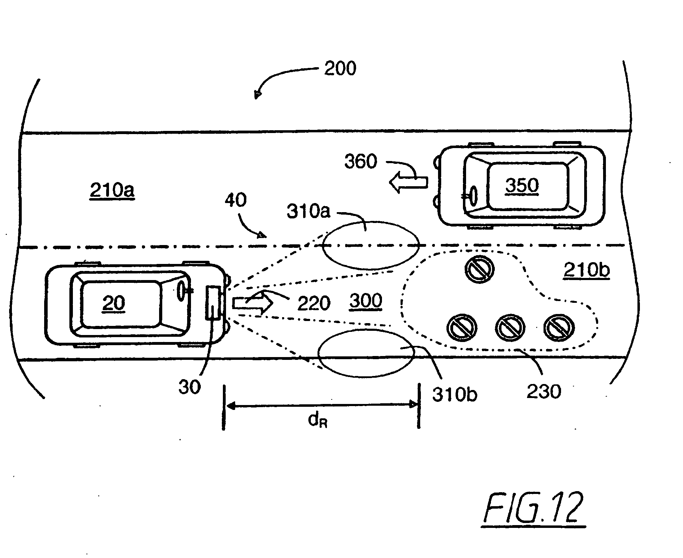

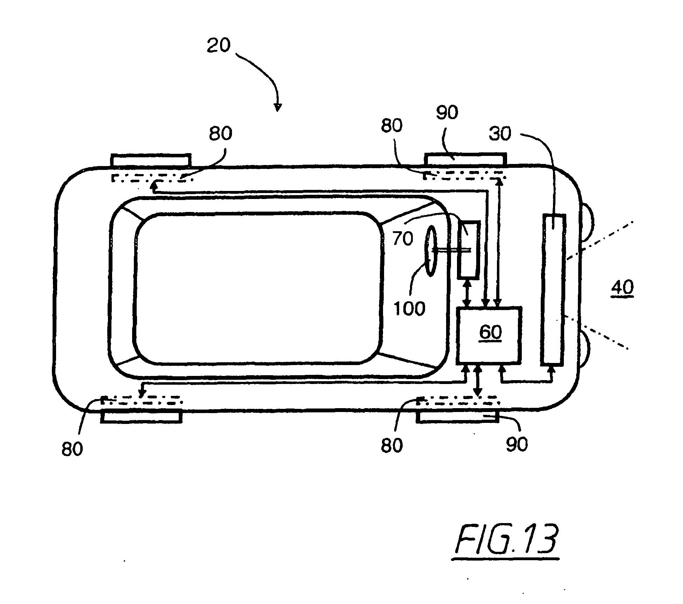

Referring to Figure 13, there is shown an automobile indicated generally by 20. At a front region of the automobile 20, there is included a sensor arrangement 30 comprising one or more sensors for sensing in a sensing region indicated generally by 40 in front of the automobile 20. Additional parts included in the automobile 20 comprise a data processing unit 60, a steering arrangement 70 and one or more brake units 80 associated with wheels of the automobile 20, the one or more brake units 80 being operable to reduce velocity of the automobile 20 when applied; the data processing unit 60 is also conveniently referred to as being a "data processing arrangement". An engine operable to generate motive power, and a power transmission coupled between the engine and the wheels of the automobile 20 are also included in the automobile 20 but not shown in Figures 12 and 13 for drawing simplicity. In a potential crash scenario, the steering force applied to the front wheels 90 is potentially capable of providing autonomous crash avoidance by steering as will be elucidated in more detail later. Additionally, the data processing unit 60 is coupled to the aforesaid one or more brake units 80 for autonomously applying braking fortes to the automobile 20 in a potential crash scenario as will be elucidated later.

In Figure 12, there is shown a section of road, motorway or similar indicated generally by 200. The section 200 comprises first and second lanes 210a, 210b respectively. The automobile 20 is operable to travel in a forward direction denoted by an arrow 220 along the second lane 210b.

In normal safe driving conditions, the sensing region 40 will be devoid of one or more potentially hazardous objects 230 present in the forward direction 220 of travel of the automobile 20, although one or more peripheral objects are potentially present at left-hand and right-hand side peripheral regions 240a, 240b respectively of the sensing region 40 as illustrated, such peripheral objects not representing a hazard to the automobile 20. The sensor arrangement 30 includes a first sensor assembly operable:

(a) to emit radiation towards the sensing region 40 including the one or more potentially hazardous objects 230 which are potentially present in less safe driving conditions;

(b) to sense such radiation reflected from the one or more objects 230; and

(c) for generating a corresponding first set of sensor signals.

Beneficially, the first sensor assembly includes an angularly scanned sensor or a sensor which is capable of providing angular discrimination between the potentially hazardous one or more objects 230 as well as sensing their closing velocities Vcl, for example by way of Doppler frequency shift. More beneficially, the first sensor assembly is implemented to include at least one of: an angularity-discriminating infra-red (IR) light direction and ranging (lidar), an angularity-discriminating microwave radio direction and ranging (radar). The sensor arrangement 30 further comprises a second sensor assembly beneficially comprisning one or more video cameras for providing a second set of sensor signals conveying an optical image of the aforesaid sensing region 40. Optionally, the sensor arrangement30 is further complemented with other types sensors, for example ultrasonic sensors operable in a radar-manner to scan the region 40. Optionally, the one or more video cameras are operable to sense in one or more of: human visible optical spectrum, infra-red (IR) optical spectrum" the IR spectrum is of especial benefit for night driving and misty or foggy conditions. As will be elucidated late, the data processing unit 60 is operable to process the first and second sets of signals to identify therefrom signals corresponding to specific objects 230, wherein the first set of signals are most useful in determining the aforesaid closing velocity Vcl and distance or position $d_{Ri}$, and the second set of signals are most useful:

a) in providing confirmation regarding the one or more objects 230 identified from processing the first set of signals; and also

(b) deriving a measure of spatial extents of the one or more objects 230 identified from processing the first set of signals.

For example, with regard to spatial extent, a sheet of aluminium foil blowing about on the section of road 200 is susceptible to potentially providing stronger microwave reflected signals than a concrete block fallen from a truck onto the section of road 200; the concrete block represents a potentially more dangerous impact hazard to the automobile 20 than the aluminium foil. In executing risk assessment, the data processing unit 60 requires further information regarding the nature of the one or more objects 230, namely a collision hazard represented by the one or more objects 230; use of the first and second sets of signals provides this further information such that each of the one or more objects 230 has associated therewith in the data processing unit 60 a corresponding hazard assessment number Ki indicative of a risk presented by the object, there being n objects in the sensing region 40, each object being individually denoted using an integer index i such that $i \leq n$ .

The data processing unit 60 is beneficially implemented in application-specific digital hardware and/or using computing hardware operable to execute software. Moreover, the data processing unit 60 is coupled to the sensor arrangement 30 for receiving the aforesaid first and second sets of sensor signals there from. Furthermore, the data processing unit 60 is coupled to one or more actuators included in the steering arrangement 70, for example one or more electric motors, operable to generate a steering torque to orientate front wheels 90 of the automobile 20; the steering torque is also felt in operation by a driver at a steering wheel 100 of the automobile 20 and beneficially provides a tactile indication of a potential risk represented by the one or more objects 230. In a potential crash scenario, the steering torque applied to the front wheels 90 is potentially capable of providing autonomous crash avoidance as will be elucidated in more detail later. Additionally, the data processing unit 60 is coupled to the aforesaid one or more brake units 80 for autonomously applying braking forces to the automobile 20 in a potential crash scenario as will also be further elucidated later.

In operation, the data processing unit 60 computes from the first set of sensor signals angular positions or distances $d_{Ri}$, and closing velocities $v_{Cl}$; of the one or more potentially hazardous objects 230 in respect of the sensor arrangement 30. The processing arrangement 60 analyses the positions or distances $d_{Ri}$ and the closing velocities $V_{Cl}$ to determine:

The data processing unit 60 is operable to implement a series of steps of:

(a) identifying the one or more objects 230 which represent collision risks;

(b) estimating a value of a required steering torque Ts necessary to avoid the one or more objects 230;

(c) *computing a* maximum available torque $T_{MAX}$ which *can* be applied *to steer away* from the one or more objects 230 to avoid collision therewith;

(d) computing *a ratio of* the *maximum* available torque $T_{MAX}$ *and the* required *steering* torque Ts; and

(e) determining how to intervene by applying a steering torque to the steering arrangement 70 in response to a value of the computed ratio.

Step (a) is preferably implemented as elucidated in the foregoing. Optionally, the data processing unit 60 is hindered from intervening when the maximum available torque $T_{MAX}$ is less than the required steering torque Ts necessary to avoid the one or more objects 230. Moreover, the data processing unit 60 is hindered from intervening when the required steering torque Ts is at !east one of: greater than an upper torque threshold, below a lower torque threshold.

The required steering torque may be calculated using a simulation model of the vehicle. A thorough description of how to implement a model is found in Wong, J.Y., Theory of ground vehicles (1993), John Wiley & Sons, Inc. In stead of simulation, maps or tables providing information of necessary torque to avoid a certain object, which future trajectory may be determined, when travelling at a known speed relative to the object, may be used.

The maximum available torque may be retrieved from a memory cell, a map stored in the processing arrangement or calculated. The maximum available steering torque, may be a limit set by legal requirement that additional steering torque applied by safety systems should not exceed a certain limit. The maximum available steering torque, may alternatively be a limit corresponding to the maximum torque output from a servo motor. Alternatively, the maximum available steering torque may be selected such that a standard driver should always be capable of overriding the steering torque applied. Sensor arrangements may be provided such that an adaptable upper limit is set, which adaptable upper limit is dependent on the action taken by the driver under the event. The sensor arrangement may typically be aware of whether the driver is steering in the opposite direction of the applied torque or not.

The intervention determined under step e) may be any or a combination of the events defined below:

- the steering safety system may be arranged to not apply any additional steering torque in the event said steering torque required exceeds said maximum torque available to avoid said hazardous object;

- the steering safety system may be arranged to compute a ratio value representative of a ratio of said required steering torque to said maximum torque available.

- the steering safety system may be arranged to not apply any steering torque in the event said ratio value is below a first threshold value;

the steering safety system may be arranged to intervene in the event said ratio value is above a first threshold value, and /or the steering safety system may be arranged to intervene by applying a steering torque in order to avoid said hazardous objects.

In preferred embodiments of the lane exit assistant system intervention is made by application of a steering torque by the steering safety system when the ratio STN of a calculated value indicating the required steering torque with a retrieved value indicating the maximum torque available execeeds a first threshold level, that is STN = Ts /$T_{MAX}$ > T1. No intervention is made if the ratio is below this first threshold value or if the required steering torque exceeds the maximum torque available. The first threshold value is suitable selected between 0,6 and 0,95, preferably between 0,75 and 0,90.

The aforementioned automatic steering function is implemented by the data processing unit 60 by sending instructions to the aforementioned one or more actuators included in the steering arrangement 70 for applying a collision avoidance corrective torque to steer the front wheels 90. The data processing unit 60 is limited with regard to the maximum steering torque $T_M$ that it is capable of applying to the front wheels via the aforementioned one or more actuators. The maximum torque *TM* is optionally determined by legal or regulatory requirements. Alternatively, or additionally, the maximum torque $T_M$ is determined in connection with a maximum torque $T_{DRrvER}$ that a driver of the automobile 20 is capable of applying to a steering wheel 100 of the automobile 20. Thus, optionally, the maximum torque $T_{MAX}$ is chosen so that the driver is always capable of overriding a steering decision executed by the data processing unit 60; in other words, in an event of the data processing unit 60 incorrectly assessing a crash situation and attempting to apply a steering force in response, the driver of the automobile 20 is always potentially capable of preventing such an incorrect assessment from resulting in a needless collision by applying an opposing force via the steering wheel 100 to compensate for the force requested by the data processing unit 60.

Computation of the required steering torque *Ts* is complex and will be elucidated further later; computation of the required torque *Ts* is, for example, based upon spatial position of the one or more objects 230 detected and their distance *dg* from the automobile 20 and/or their closing velocity $V_{Cl}$. As elucidated earlier, it is beneficial that the force $T_{DRIVER} > Ts$.

In a similar manner to Equation 1 (Eq. 1), the algorithm is operable to compute a steering threat number (*STN*) defined by Equation 2 (Eq. 2):

$$STN = Ts/T_{MAX}$$

When the steering threat number *STN* is less than unity, namely *STN* < 1, the data processing unit 60 is susceptible to being able to steer the automobile 20 away from a potential collision by applying a steering torque to the steering arrangement 70. Thus, the data processing unit 60 is beneficially operable to apply automatic collision avoidance steering to the steering arrangement 70 when the threat number *STN* is less than unity.

The present lane exit assistant system is also concerned with a strategy for coping with the steering threat number *STN* being greater than unity, the required torque *Ts* to avoid a collision by steering is greater than the maximum torque *TM* that the data processing unit 60 is permitted to invoke from the steering arrangement 70. The data processing unit 60 is operable in such a situation wherein *STN* > *1* to refrain from applying any collision avoidance steering force to the steering arrangement 70; if steering is incapable of avoiding a collision, it is essential that the driver of the automobile 20 has full control of :he automobile 20 to try to select same direction of steering the automobile 20 that best mitigates damage from the potential collision.

The data processing unit 60 is operable to compute updated values for the steering threat number *STN* whilst application of required steering torque Ts is invoked from the steering arrangement 70, namely during a relatively short time period during which the data processing unit 60 attempts to avoid a crash by steering intervention when the threat number *STN* is less than unity. The data processing unit 60 is thus capable of dynamically monitoring success of its steering intervention whilst the intervention is occurring. Thus, if the steering threat number *STN* decreases during a steering lane exit assistant system, the data processing unit 60 is operable to interpret such a decrease as being indicative that the automobile 20 is being successfully autonomously steered out of a potential collision situation. Conversely, if the steering threat number *STN* increasing during a steering intervention, the processing unit 60 is susceptible to interpreting such an increase that:

a) the intervention is potentially unsuccessful, for example as a consequence of incorrect assessment of the one or more objects 230 in the region 40, or that

b) the driver of the automobile 20 is applying an opposing force to momentarily override operation of the data processing unit 60; when the threat number *STN* in such case exceeds unity, the data processing unit 60 is operable to terminate the steering intervention.

Optionally, the data processing unit 60 is configured to be operable so that any increase n the threat number *STN* during a steering intervention is operable to terminate the steering intervention.

In one embodiment of the lane exit assistant system, method step of determining a safest direction of the automobile.

The safest direction ($F_{lane}$) 300 of the automobile 20 is defined as a portion of the sensing region 40 towards which it is safe for the automobile 20 to travel with a minimal risk of colliding with any objects taking into account trajectories of such objects; moreover, the safest direction ($F_{lane}$) 300 is not to be confused with the aforementioned second Jane 210b of the section of road 200. Furthermore, the data processing unit 60 is operable to continuously update in a temporally iterative manner its data regarding angular direction of the safest direction ($F_{lane}$) 300. In a normal driving situation devoid of potential hazards in the direction of travel 220 of the automobile 20, the data processing unit 60 will compute a central portion of the sensing region 40 to be devoid of one or more obstacles such that the automobile 20 can safely travel in a direction of the central portion; in such a situation, the central portion is regarded by the data processing unit 60 to be the aforesaid safest direction ($F_{lane}$) 300. In the normal driving situation, various objects will be occasionally identified by the processing unit 60 to lie at the right-hand and left-hand side periphery regions 310b, 310a of the sensing region 40 with relative velocities $V_{Cl}$ and positions of distances $d_{Ri}$, which are not likely to intercept the safest direction ($F_{lane}$) 300 and which are not otherwise on course to impact onto the automobile 20. In such a scenario, the data processing unit 60 is operable to selectively apply a torque, as will be elucidated in more detail later, via the one or more aforementioned actuators associated with the steering arrangement 70 to steer the automobile 20 in a direction of the safest direction ($F_{lane}$) 300, thereby steering away from any potential hazards. In normal operation, a driver of the automobile steering the automobile 20 in a direction of the safest direction ($F_{lane}$) 300 devoid of hazardous objects enables the data processing unit 60 to obtain a cue for defining the safest direction ($F_{lane}$) 300 to be subsequently followed. When the driver of the automobile 20 steers the automobile 20 to an exit of the section of road 200, the safest direction ($F_{lane}$) 300 will then no longer correspond to the second lane 210b as the automobile 20 exits.

Potentially dangerous conditions are susceptible to arising in an event of the driver of the automobile 20 momentarily losing concentration, being temporarily interrupted, and/or not being able to cognitively appreciate the presence of one or more potentially hazardous objects present or likely soon to be present in the safest direction ($F_{lane}$) 300; in such case, the driver is incorrectly defining the direction of travel 220 of the automobile 20. A lack of concentration can arise from driver fatigue wherein the driver falls asleep at a wheel 100 of the automobile 20. Temporary interruption of the driver can occur when the driver is exposed to bright sunlight at low angle shining through a front window of the automobile 20 into eyes of the driver, thereby temporarily blinding a field of view of the driver; such problems are especially exacerbated when a front windscreen of the automobile 20 is misted and/or unclean. Lack of cognitive appreciation can arise as a consequence of fatigue or distraction within the automobile 20, for example noisy and mischievous children being transported on a rear seat of the automobile 20. The data processing unit 60 is, as elucidated earlier, operable to compute closing velocities V and positions or distances $d_{Ri}$, of the one or more objects 230 to determine whether or not they are likely to occlude the safest direction ($F_{lane}$) 300.

If the driver of the automobile 20 falls asleep such that the automobile 20 steers towards a vehicle 350 travelling in an opposite direction 360 in the first lane 210a as shown in Figure 12, the data processing unit 60 will identify that the vehicle 350 is in a trajectory from the left-hand side peripheral side region 210a to the safest direction ($F_{lane}$) 300, such that the safest direction ($F_{lane}$) 300 has effectively started shifting towards the right-hand Side peripheral side region 210b. In such a scenario, the data processing unit 60 is operable to apply a corrective steering torque to the steering assembly 70 to steer away from the vehicle 350 towards the second lane 210b. As will be elucidated later, the corrective steering torque is preferably of a magnitude corresponding to a collision risk Ki represented by the vehicle 350; the steering torque has, for example, a magnitude which is a linear, square-law or other polynomial function of the collision risk Ki represented by the vehicle 350. As the automobile 20 approaches the vehicle 350, the corrective steering torque attempting to steer the automobile 20 back towards the second Lane 210b becomes progressively greater because of potentially increasing danger represented by the vehicle 350. Moreover, the corrective steering torque applied by the data processing unit 60 via the steering assembly 70 is beneficially of a maximum magnitude by design of the aforementioned actuators, or intentionally limited to the maximum magnitude by the data processing unit 60, such that the driver is capable of overriding the corrective steering torque in a potential situation that the data processing unit 60 has incorrectly assessed significances of the one or more potentially hazardous objects 230.

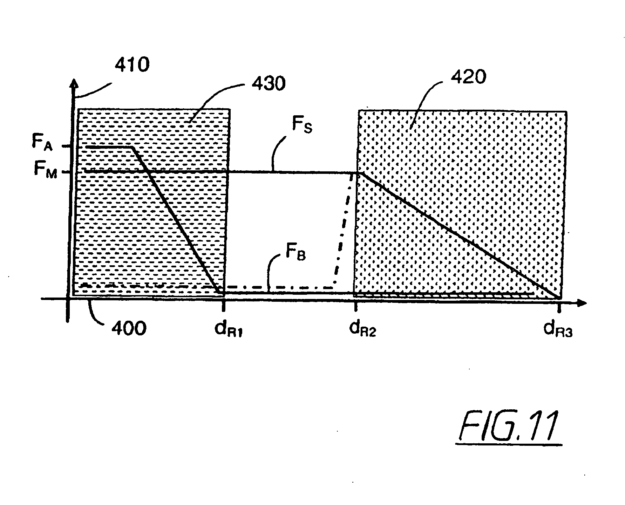

The automobile 20 is optionally also provided with automatic braking for crash mitigation or crash avoidance as represented in Figure 11. In Figure 11, there is shown a graph comprising an abscissa axis 400 representing distance of the automobile 20 from a potentially hazardous object present in the safest direction ($F_{lane}$) 300. Moreover, the graph includes an ordinate axis 410 representing braking force or corrective steering force susceptible to being invoked by the data processing unit 60 in operation. When the potentially hazardous object 230 is at a range of greater than $d_{R3}$ from the automobile 20, it is too remote to be reliably sensed by the sensor arrangement 30 and therefore the data processing unit 60 is operable to then disregard the potentially hazardous object 230; as an example, contemporary sensing technology enables the distance dR3 to be in a range of 100 to 150 metres. Moreover, when the potentially hazardous object 230 is at a range between $d_{R2}$ and $d_{R3}$ from the automobile 20 as denoted by a regime 420, the data processing unit 60 is operable to apply a collision avoidance steering torque felt at the wheel 100 by the driver wherein the torque is represented by a curve Fs which progressively increases as the one or more potentially hazardous objects 230 approach the automobile 20. Below the distance $d_{R2}$, the data processing unit 60 is operable to compute that collision avoidance by steering is not likely to be to assist the driver, in which case the collision avoidance steering torque applied by the actuators is maintained at a maximum allowed torque $T_M$ to keep the driver aware of the potentially imminent collision, or reduced to substantially zero as illustrated as a dotted line in Figure 11 so as the provide the driver with full steering control. Application of an increasing collision avoidance steering torque below the distance 42 is potentially susceptible to causing the automobile 20 to spin which may represent a potentially even greater hazard on the section of road 200. Below a distance $d_{R2}$, in a regime 430, the data processing unit 60 is operable to apply autonomous braking as a last resort to provide collision avoidance or collision mitigation. A braking force $F_B$ which is autonomously applied increases as the distance $d_{Ri}$; decreases, the braking force being limited to a maximum force $F_A$ that can safely be applied by the automobile 20.

Thus, as illustrated in Figure 12, if the collision avoidance steering torque generated by the actuators in response to instructions from the data processing unit 60 is unable to divert the automobile 20 from colliding with the vehicle 350, automatic braking is applied by the automobile 20 as last resort. However, both the data processing unit 60 and the aforesaid automatic braking for the automobile 20 can be synergistically provided with signals generated in operation by the sensor arrangement 40. Beneficially, automatic braking is also implemented via the data processing unit 60.

When automatic crash mitigation or avoidance is implemented in the automobile 20, a braking force $F_B$ required to avoid a collision with a leading vehicle to the automobile 20 is computed in the data processing unit 60; computation of the braking force $F_B$ requires optionally taking into account road conditions as sensed by additional sensors to the sensor arrangement 30 included within or on the automobile 20, for example precipitation and temperature sensors. The data processing unit 60 executes a braking algorithm and then compares the computed braking force $F_B$ required to avoid a collision with physical limitations of the automobile 20, such limitations including tyre-to-road friction, and brake system rise-time, namely a braking force $F_A$ that the automobile 20 is capable of providing; "tyres" are also known as "tires" in certain variants of English.

The data processing unit 60 is operable to compute a brake threat number (BTN) defined by Equation 1 (Eq. 1):

$$BTN = F_R/F_A$$

In a situation when the required braking force $F_R$ greater than the braking force $F_A$ that the automobile 20 is capable of providing, the brake threat number BTN is greater than unity and the data processing unit 60 detects that a potential collision cannot be avoided solely by braking; the data processing unit 60 is then operable to automatically apply a braking force to one or more of the brake units 80 for crash mitigating, namely reducing a severity of, likely damage resulting from a collision event.

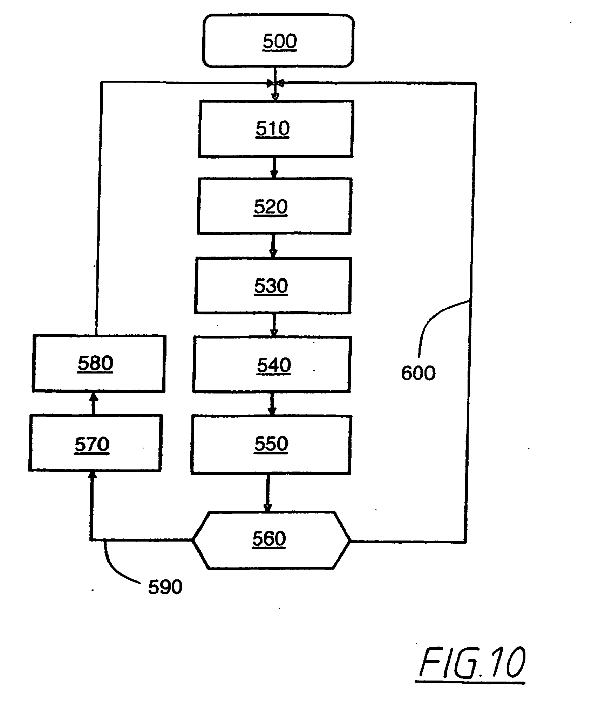

The algorithm described in the foregoing executed in the data processing unit 60 will now be further elucidated with reference to Figure 10. Steps of the algorithm are depicted in Figure 10 which are susceptible to being interpreted with reference to Table 1. Table 1 see appendix I:

Although Equation 2 (Eq. 2) includes a parameter of the required steering torque $T_{REQ}$, it will be appreciated that computation of the magnitude and direction, namely steer right or left, of the required steering torque $T_{REQ}$ is a complex task associated with updated computation of the safest direction ($F_{lane}$) 300.

In a simplest implementation of the data processing unit 60, the algorithm is operable to consider the region 40 to be subdivided into left and right sectors. A direction in which the torque $T_{REQ}$ is directed is beneficially away from the sector of the region 40 which results in one or more of: the strongest return signal, a shortest distance to an object and a fastest closing velocity to an object when interrogated by the sensor arrangement 30. More complex implementations are possible wherein the region 40 is subdivided into more than two sectors and signals from several types of sensors included in the sensor arrangement 30 are merged; for example, a microwave radar sensor is susceptible to providing a stronger signal from relatively smaller metallic objects than relatively larger concrete objects, whereas a lidar sensor included in the sensor arrangement 30 is considerably affected by special types of optical coatings included on objects. Moreover, an optical video camera is susceptible to being influenced by strength of ambient light radiation in the region and colour contrast of the one or more objects 230. Most reliably representative signals from the sensor arrangement 30 representative of the one or more objects 230 in front of the automobile 20 are potentially obtained by merging signals generated from mutually different types of sensors included in the arrangement, for example a combination of lidar and microwave radar.

In the automobile 20, a warning is defined as being an audible, tactile or hepatic warning which does not alter the path or trajectory of the automobile 20 without an appropriate response from the driver. Moreover, an intervention applied by the data processing unit 60 is an ability of the data processing unit 60 to directly affect a trajectory of the automobile 20; in the present lane exit assistant system, with regard to steering, intervention has limited authority and is intended to augment commands from the driver. As elucidated earlier, the safest direction ($F_{lane}$) 300 is defined as an area of roadway that the automobile 20 would be expected to travel in the absence of any obstruction, for example from the one or more objects 230. A lane departure is defined as a point in time when one of the front wheels of the automobile 20 are outside a corresponding lane boundary.

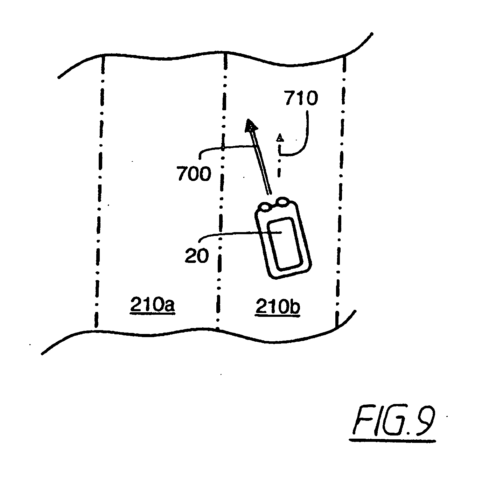

Various driving scenarios will now be described with reference to Figures 6 to 9 wherein the present lane exit assistant system is utilized to provide collision avoidance by steering. Referring to Figure 9, there is shown the automobile 20 being driven along the lane 210b. In such a situation, the safest direction ($F_{lane}$) of the automobile 20 is straight ahead along the lane 210b; the safest direction ($F_{lane}$) is therefore defined by an arrow 710. The driver then causes the automobile 20 to change direction as denoted by an arrow 700. On account of their being no obstructing objects detected by the sensor arrangement 30 in conjunction with the data processing unit 60 in the changed direction 700, the data processing unit 60 interprets such a situation to be a bona fide manoeuvre by the driver such that the safest direction ($F_{lane}$) is interpreted by the data processing unit 60 to have changed from the direction 710 to the direction 700.

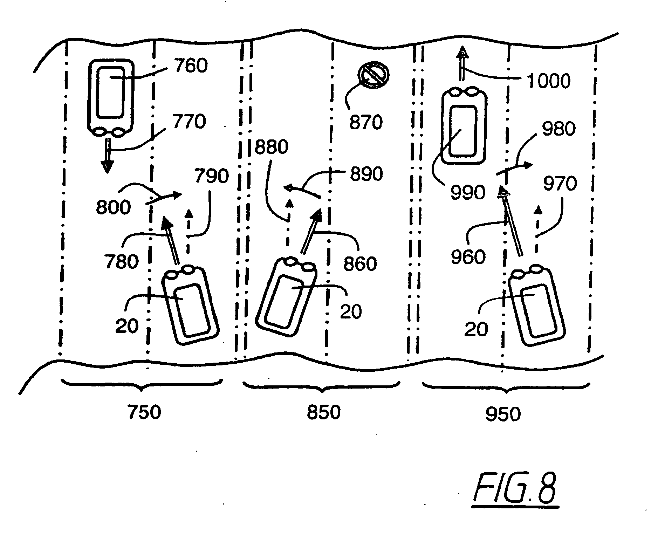

Referring next to Figure 8, there is shown a more complex multi-lane road scenarios including three sections 750, 850, 950. In the section 750, the automobile 20 is travelling along its safest direction ($F_{lane}$) whose direction is denoted by an arrow 790 at a time t. At a time t + $\Delta$t, the driver causes the automobile 20 to turn in a left-hand direction denoted by an arrow 780 towards a vehicle 760 travelling in another direction denoted by an arrow 770. The data processing unit 60 in combination with the sensor arrangement 30 is operable to detect a presence of the vehicle 760 and also determine its direction of travel. The data processing unit 60 computes that the vehicle 760 could represent a collision hazard based on video camera information. However, the data processing unit 60 is also operable to compute that should the direction of the safest direction ($F_{lane}$) be updated to correspond to that of the direction 780, that the vehicle 760 with time will exit from the safest direction ($F_{lane}$) when assumed to be in the direction 780. In such a scenario, the vehicle 760 is correctly recognized not to be a considerable hazard and the data Processing unit 60 is operable to applying a modest steering torque to the steering arrangement 70 to cause the automobile 20 to tend to steer slightly towards the right hand side as denoted by an arrow 800.

In the section 850, the automobile 20 at a time t is travelling in a direction denoted by an arrow 880 corresponding to its safest direction ($F_{lane}$) The driver of the automobile 20 :hen subsequently at a time t + $\Delta$t causes the automobile 20 to change direction denoted ay an arrow 860 in a direction of an object 870 which the data processing unit 60 in combination with the sensor arrangement 30 identifies is a stationary object and represents a collision hazard for the automobile 20. The data processing unit 60 is operable to determine that the safest direction ($F_{lane}$) in a direction of the arrow 880 is correct and that the driver of the automobile 20 is attempting a dangerous manoeuvre by steering into the direction 860. In consequence, the data processing unit 60 is operable to apply a relatively strong torque denoted by an arrow 890 via the steering arrangement to steer the automobile towards the original safest direction ($F_{lane}$) in the direction 880. The magnitude of the torque is determined by several factors:

(a) that the object 870 is capable of representing a collision hazard as identified from video information, thereby having a high Ki risk value;

(b) that the object 870 is not in a trajectory moving away from the direction 860 such that if the direction 860 were assumed to the updated safest direction ($F_{lane}$) at the time t + $\Delta$t, that the object 870 would lie on the path of such an updated safest direction ($F_{lane}$) thereby representing an unacceptable risk situation; and

(c) that the object 870 is stationary giving rise to a potentially high closing velocity $V_{Cl}$ in respect of the automobile 20.

In the section 950, the automobile 20 is at a time t travelling along its safest direction ($F_{lane}$) in a direction denoted by an arrow 970. The driver then causes the automobile 20 to change its direction of travel as denoted by an arrow 960 towards a vehicle 990 travelling in a direction 1000. The data processing unit 60 in combination with sensing arrangement 30 identifies the vehicle 990 to represent a collision hazard, but to be moving in a general direction substantially similar to that of the automobile 20, namely with a relatively low closing velocity $V_{Ci}$. In such a situation, the data processing unit 60 causes the steering arrangement 70 to apply a more modest torque denoted by an arrow 980 to steer the automobile 20 back towards its original safest direction ($F_{lane}$) denoted by the arrow 970. However, were the vehicle 990 to be sensed to be moving away from the automobile 20, the torque 980 would be corresponding less or substantially negligible.

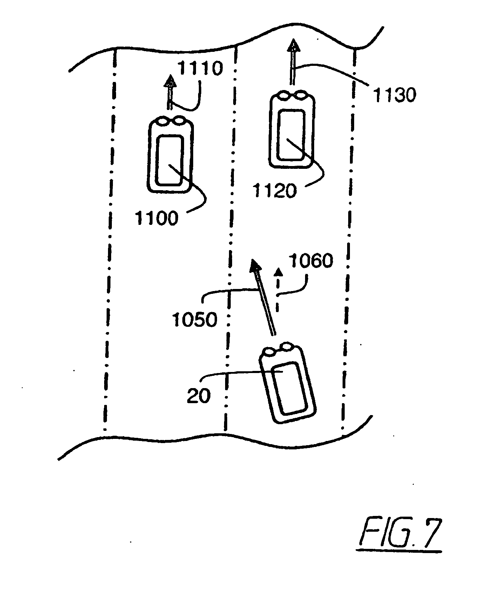

In Figure 7, there is shown a road situation which is often encountered on motorways and such like. The automobile 20 at a time t is travelling in a direction denoted by an arrow 1060 defining a safest direction ($F_{lane}$) for the automobile 20. In front of the automobile 20 is a second vehicle 1120 travelling in a direction 1130 which is substantially in the same direction as the safest direction ($F_{lane}$) of the automobile 20. On account of the automobile 20 and the second vehicle 1120 having substantially zero relative closing velocity $V_{Ci}$, the data processing unit 60 is operable to interpret the second vehicle 1120 as not being a collision risk to the automobile 20. The driver of the automobile 20 then decides to overtake the second vehicle 1120 and changes direction denoted by an arrow 1050 towards a first vehicle 1100 travelling in a direction denoted by an arrow 1110, this direction 1110 being substantially similar to the direction of travel 1130 of the second vehicle 1120. In a situation wherein the first vehicle 1100 is travelling away from the automobile 20 faster than the second vehicle 1120, the data processing unit 60 in combination with the sensing arrangement 30 is operable to determine that the change of direction of travel of the automobile 20 as denoted by the arrow 1050 is a safe manoeuvre and subsequently at a time t + $\Delta$t updates its information regarding the safest direction ($F_{lane}$) of the automobile to correspond to a direction of the arrow 1050. However, in a situation wherein the first vehicle 1120 is travelling more slowly than the second vehicle 1120, the data processing unit 60 identifies the automobile 20 and the first vehicle 1100 to have a closing velocity $V_{Ci}$ favoring the safest direction ($F_{lane}$) of the automobile 20 to remain along the direction 1060; in such a situation, the data processing unit 60 applies a torque via the steering arrangement 70 to urge the automobile towards the direction 1060. On account of the two vehicles 1100 and 1120 being substantially similar objects, their hazard ratings Ki will be mutually similar, as determined from video camera information provided to the data processing unit 60, hence determination of the safest direction ($F_{,ane}$) is based on vehicle relative velocity information, for example closing velocity information.

Referring next to Figure 6, there is shown the automobile 20 travelling in a direction denoted by an 1510 defining

a safest direction ($F_{lane}$) for the automobile 20. Directly ahead of the automobile 20 is a stationary object 1540, for example road works or an abandoned vehicle, and travelling in a left-hand lane is a moving vehicle 1520 travelling in a direction denoted by an arrow 1530 substantially parallel to the safest direction ($F_{lane}$) of the automobile 20. The data processing unit 60, by processing sensing signals output from the sensor arrangement 30, will identify that the object 1540 has a high closing velocity $V_{Ci}$; relative to the automobile 20 in comparison to that of the vehicle 1520. The data processing unit 60 will in such a situation apply a strong torque in a left-hand direction as denoted by an arrow 1550 to steer the automobile 20 away from a collision with the stationary object 1540 towards the vehicle 1520 as denoted by an arrow 1500. The arrow 1500 thus defines an updated safest direction ($F_{,ane}$) for the automobile 20 even despite the safest direction ($F_{lane}$) being now directed towards a vehicle.

In the examples shown in Figure 6 to 9 and described in the foregoing, it will be appreciated that the data processing unit 60 is operable to apply a torque via the steering arrangement which is a complex function of several parameters. The complex function is represented in general form in Equation 3 (Eq. 3 - see appendix II):

It will be appreciated that complex function represented in Equation 3 (Eq. 3) is an example of signal processing performed in the data processing unit 60 operable to Provide automatic steering characteristics as described, for example, with reference to Figures 6 to 9 but not limited thereto. Parameters employed in Equation 3 (Eq. 3) can be varied depending upon steering characteristic desired; for example, road condition sensors can also input to the sensing arrangement 30 so that more conservative steering manoeuvres are implemented by the data processing unit 60 when road conditions are slippery, for example in icy winter conditions.

The sensing arrangement 30 can be further supplemented with sensors mounted at a rear of the automobile 20 to sense potential rear-end impact onto the automobile 20, for example to steer the automobile 20 away from a potential rear-end collision.

In the foregoing, it will be appreciated that autonomous steering is applied firstly by the processing unit in response to signals provided by the sensing arrangement 30. In an event of a steering manoeuvre not being able to avert a collision, the data processing unit 60 is operable to implement autonomous braking for crash avoidance or crash mitigation when the distance between the automobile and one or more objects 230 is less than dR, as depicted in Figure 6.

The data processing unit 60 can be implemented such that autonomous steering to avoid collision as elucidated in the foregoing is only active when the velocity $V_{auto}$ the automobile 20 is above a lower threshold velocity, for example $V_{auto} > 65$ km/h. Moreover, the such autonomous steering is optionally disabled when the velocity $V_{auto}$ of the automobile 20 is above an upper threshold velocity, for example $V_{auto} > 120$ km/h; such a limit is desirable in that 120 km/hour corresponds to approximately 40 metres/second in which case the sensing arrangement 30 with a range of 150 metres is only capable of sensing up to 5 seconds of travel of the automobile 20. Optionally, the data processing unit 60 is operable to cope with a road curvature radius of 250 metres or greater. Optionally, the data processing unit 60 can be configured to abort automatic steering intervention in a situation wherein a collision cannot be avoided so as to give the driver of the automobile 20 full control of the automobile.

Reference numerals included within parentheses in the claims are intended to assist understanding of the subject matter claimed in the claims,. The reference numerals are not to be construed to limit the scope of the claims. Reference to the singular is also to be construed to relate to the plural.

Terms used in describing and claiming the present invention such as "include", 'comprise", "consist of", "have", "are", "incorporate", are to be construed in a non-exclusive manner, namely to allow for other parts or components to be present which are not explicitly indicated

**Claims**

**1.** A system for collision course prediction including:

- a sensor system (18) arranged on a host vehicle (20), said sensor system (18) being arranged to receive input data relating to a target vehicle external to said host vehicle (20), said target vehicle being positioned within a detecting range (34) of said sensor system (18), wherein an object position (x,y), and an object velocity ($\dot{x},\dot{y}$) relative to the host vehicle are associated with the target vehicle, said input data defining a current state of the target vehicle;
- a time to collision estimator control block, which calculates an estimated time to collision $T_{ttc}$ based on a longitudinal distance (x), longitudinal velocity ($\dot{x}$) and longitudinal acceleration ($\dot{x}$) of the target vehicle relative to the host vehicle,
- a lateral distance estimator control block, which estimates the lateral distance (y) between the centres of the host vehicle and target vehicle at the estimated time to collision $T_{ttc}$, **characterized in that** the system further includes
- a collision course condition determination unit, which is arranged to determine, at an determination instant t prior to the estimated time to collision $T_{ttc}$, whether the target vehicle will collide with the host vehicle or not dependent on if said lateral distance is within or outside a first interval, wherein the magnitude of said first interval is being based on the lateral extension of the host vehicle, the lateral extension of the target vehicle and a correction term Z2 being dependent on a distance to the target vehicle from the host vehicle at said determination instant t.

2. A system according to claim 1, **characterized in that** said collision course condition determination unit, further is arranged to determine whether the target vehicle will collide with the host vehicle or not dependent on whether said estimated time to collision $T_{ttc}$ is within a time interval $T_{LC1} < T_{ttc} < T_{LC2}$, where $T_{LC1}$ is an estimated time for the host vehicle to enter the lane of the target vehicle and $T_{LC2}$ is an estimated time for the host vehicle to leave the lane of the target vehicle.

3. A system according to claim 1 or 2, **characterized in that** said lateral distance estimator control block estimates the lateral distance ($y(T_{ttc})$) between the centres of the host vehicle and target vehicle at the estimated time to collision $T_{ttc}$ as $T_{ttc}$ as $y(T_{ttc}) = y(t) + \dot{y}(t) \cdot T_{ttc} + \ddot{y}(t) \cdot T_{ttc}^2 / 2,$ where $\dot{y}(t)$ is the lateral velocity and $\ddot{y}$

($t$) is the lateral acceleration at said determination instant t.

4. A system according to claim 1, 2 or 3, **characterized in that** said correction term Z2 further being dependent sensor noise distribution.

5. A system according to claim 1, 2 or 3, **characterized in that** said correction term Z2 is determined as Z2 = Z0 + k*r, where Z0 is a constant, k is a factor dependent on sensor noise distribution, and r is the distance to the target vehicle from the host vehicle at said determination instant t.

6. A lane exit assistance system which is arranged to assess the risk for a host vehicle to leave a current lane and enter into a neighbouring lane and to generate an intervention in the event the host vehicle is to leave said current lane and enter into said neighbouring lane, said lane exit assistance system including:

- a steering torque condition function block assessing whether a steering torque required to avoid a potential collision in said neighbouring lane is within a range,
- host lane threat condition functional block which is arranged at assess whether a required braking force to avoid an obstacle in said current lane is below a threshold value,
- a timing condition functional block which is arranged to determine whether an estimated time to collision is below a threshold value, and
- system for collision course prediction according to any of claims 1 - 5.

**Patentansprüche**

1. System zur Kollisionskursvorhersage, beinhaltend:

- ein Sensorsystem (18), das auf einem Host-Fahrzeug (20) angeordnet ist, wobei das Sensorsystem (18) dafür ausgelegt ist, Eingangsdaten zu empfangen, die sich auf ein Zielfahrzeug extern vom Host-Fahrzeug (20) beziehen, wobei das Zielfahrzeug innerhalb eines Detektionsbereichs (34) des Sensorsystems (18) positioniert ist, wobei eine Objektposition (x, y) und eine Objektgeschwindigkeit ($\dot{x}, \dot{y}$) relativ zum Host-Fahrzeug mit dem Zielfahrzeug assoziiert sind, wobei die Eingangsdaten einen aktuellen Zustand des Zielfahrzeugs definieren;
- einen Zeit-bis-Kollisions-Abschätzersteuerblock, der eine geschätzte Zeit bis zur Kollision $T_{ttc}$ berechnet, basierend auf ein Längsdistanz (x), Längsgeschwindigkeit ($\dot{x}$) und Längsbeschleunigung ($\ddot{x}$) des Zielfahrzeugs relativ zum Host-Fahrzeug,
- einen Lateraldistanz-Abschätzer-Steuerblock, der die Lateraldistanz (y) zwischen den Zentren des Host-Fahrzeugs und des Ziel-Fahrzeugs zum abgeschätzten Kollisionszeitpunkt $T_{ttc}$ abschätzt, **dadurch gekennzeichnet, dass** das System weiter beinhaltet:
- eine Kollisionskursbedingungs-Bestimmungseinheit, die dafür ausgelegt ist, zu einem Bestimmungszeitpunkt t vor der abgeschätzten Zeit bis zur Kollision $T_{ttc}$ zu bestimmen, ob das Zielfahrzeug mit dem Host-Fahrzeug kollidieren wird oder nicht, abhängig davon, ob die Lateraldistanz innerhalb oder außerhalb eines ersten Intervalls ist, wobei die Größe des ersten Intervalls auf der Lateralausdehnung des Host-Fahrzeugs, der Lateralausdehnung des Ziel-Fahrzeugs und einem Korrekturterm Z2 basiert, der von einer Distanz des Ziel-Fahrzeugs vom Host-Fahrzeug zum Bestimmungszeitpunkt t abhängt.

2. System gemäß Anspruch 1, **dadurch gekennzeichnet, dass** die Kollisionskursbedingungs-Bestimmungseinheit weiter ausgelegt ist, zu bestimmen, ob das Ziel-Fahrzeug mit dem Host-Fahrzeug kollidieren wird oder nicht, abhängig davon, ob die abgeschätzte Zeit bis zur Kollision $T_{ttc}$ innerhalb eines Zeitintervalls $T_{LC1} < T_{ttc} < T_{LC2}$ ist, wobei $T_{LC1}$ eine abgeschätzte Zeit für das Host-Fahrzeug ist, auf die Spur des Ziel-Fahrzeugs aufzufahren, und $T_{LC2}$ eine geschätzte Zeit für das Host-Fahrzeug ist, die Spur des Ziel-Fahrzeugs zu verlassen.

3. System gemäß Anspruch 1 oder 2, **dadurch gekennzeichnet, dass** der Lateraldistanz-Abschätzer-Steuerblock die Lateraldistanz ($y(T_{ttc})$) zwischen den Zentren des Host-Fahrzeugs und des Ziel-Fahrzeugs bei der abgeschätzten Zeit bis zur Kollision

$$\texttt{T}_{\texttt{ttc}} \texttt{ als } \texttt{y(T}_{\texttt{ttc}}\texttt{)} \texttt{ = } \texttt{y(t)} \texttt{ + } \dot{y}\texttt{(t)} \bullet \texttt{T}_{\texttt{ttc}} + \ddot{y}\texttt{(t)} \bullet T_{ttc}^2/2$$

abschätzt, wobei $\dot{y}$(t) die Lateralgeschwindigkeit ist und $\ddot{y}$(t) die Lateralbeschleunigung zum Bestimmungszeitpunkt t ist.

4. System gemäß Anspruch 1, 2 oder 3, **dadurch gekennzeichnet, dass** der Korrekturterm Z2 weiter abhängig von der Sensorrauschverteilung ist.

5. System gemäß Anspruch 1, 2 oder 3, **dadurch gekennzeichnet, dass** der Korrekturterm Z2 als Z2 = Z0 + k*r determiniert ist, wobei Z0 eine Konstante ist, k ein Faktor ist, der von der Sensorrauschverteilung abhängt, und r die Distanz zum Ziel-Fahrzeug ab dem Host-Fahrzeug zum Bestimmungszeitpunkt t ist.

6. Spurverlass-Assistenzsystem, das dafür ausgelegt ist, das Risiko für ein Host-Fahrzeug zu bewerten, eine aktuelle Spur zu verlassen und auf eine Nachbarspur zu fahren, und eine Intervention bei dem Ereignis durchzuführen, bei dem das Host-Fahrzeug dabei ist, die aktuelle Spur zu verlassen und auf die Nachbarspur zu fahren, wobei das Spur-Verlass-Assistenzsystem beinhaltet:

    - einen Lenkdrehmoment-Bedingungsfunktionsblock, der bewertet, ob ein Lenkmoment, das erforderlich ist, um eine potentielle Kollision auf der Nachbarspur zu vermeiden, innerhalb eines Bereichs liegt,
    - einen Host-Spur-Gefahrbedingungsfunktionsblock, der dafür ausgelegt ist, zu bewerten, ob eine erforderliche Bremskraft zum Vermeiden eines Hindernisses in der aktuellen Spur unterhalb eines Schwellenwertes liegt,
    - einen Timing-Bedienungsfunktionsblock, der dafür ausgelegt ist, zu bestimmen, ob eine abgeschätzte Zeit bis zur Kollision unterhalb eines Schwellenwertes ist, und
    - ein System zur Kollisionskurs-Vorhersage gemäß einem der Ansprüche 1 bis 5.

**Revendications**

1. Système pour la prédiction de trajectoire de collision comprenant :

    - un système détecteur (18) disposé sur un véhicule hôte (20), ledit système détecteur (18) étant agencé pour recevoir des données d'entrée concernant un véhicule cible externe audit véhicule hôte (20), ledit véhicule cible étant positionné dans une portée de détection (34) dudit système détecteur (18), dans lequel une position d'objet (x, y) et une vitesse d'objet ($\dot{x}$, $\dot{y}$) par rapport au véhicule hôte sont associées au véhicule cible, lesdites données d'entrée définissant un état actuel du véhicule cible ;
    - un bloc de commande d'estimation de temps avant collision, qui calcule un temps estimé avant collision $T_{ttc}$ basé sur une distance longitudinale (x), une vitesse longitudinale ($\dot{X}$) et une accélération longitudinale ($\ddot{X}$) du véhicule cible par rapport au véhicule hôte,
    - un bloc de commande d'estimation de distance latérale, qui estime la distance latérale (y) entre les centres du véhicule hôte et du véhicule cible au temps estimé avant collision $T_{ttc}$, **caractérisé en ce que** le système comprend en outre :
    - une unité de détermination de condition de trajectoire de collision, qui est agencée pour déterminer, à un instant de détermination t avant le temps estimé avant collision $T_{ttc}$, si le véhicule cible heurtera ou non le véhicule hôte en fonction du fait que ladite distance latérale est à l'intérieur ou à l'extérieur d'un premier intervalle, dans lequel la grandeur dudit premier intervalle est basée sur l'extension latérale du véhicule hôte, l'extension latérale du véhicule cible et un terme de correction Z2 qui est dépendant d'une distance du véhicule hôte par rapport au véhicule cible audit instant de détermination t.

2. Système selon la revendication 1, **caractérisé en ce que** ladite unité de détermination de condition de trajectoire de collision est agencée en outre pour déterminer si le véhicule cible heurtera ou non le véhicule hôte en fonction du fait que ledit temps estimé avant collision $T_{ttc}$ est à l'intérieur d'un intervalle de temps $T_{LC1} < T_{ttc} < T_{LC2}$, où $T_{LC1}$ est un temps estimé pour que le véhicule hôte entre dans la voie du véhicule cible et $T_{LC2}$ est un temps estimé pour que le véhicule hôte quitte la voie du véhicule cible.

3. Système selon la revendication 1 ou 2, **caractérisé en ce que** ledit bloc de commande d'estimation de distance latérale estime la distance latérale ($y(T_{ttc})$) entre les centres du véhicule hôte et du véhicule cible au temps estimé pour la collision $T_{ttc}$ comme $y(T_{ttc}) = y(t) + \dot{y}(t) \cdot T_{ttc} + \ddot{y}(t) \cdot T_{ttc}^2 / 2$, où $\dot{y}(t)$ est la vitesse latérale et $\ddot{y}(t)$ est l'accélération latérale audit instant de détermination t.

4. Système selon la revendication 1, 2 ou 3, **caractérisé en ce que** ledit terme de correction Z2 dépend en outre de la distribution de bruit de détection.

5. Système selon la revendication 1, 2 ou 3, **caractérisé en ce que** ledit terme de correction Z2 est déterminé comme Z2 = Z0 + k*r, où Z0 est une constante, k est un facteur dépendant de la distribution de bruit de détection et r est la distance du véhicule hôte au véhicule cible audit instant de détermination t.

6. Système d'assistance de changement de voie qui est agencé pour évaluer le risque pour qu'un véhicule hôte quitte une voie actuelle et entre dans une voie voisine et pour générer une intervention dans le cas où le véhicule hôte serait en train de quitter ladite voie actuelle et entrer dans ladite voie voisine, ledit système d'assistance de changement de voie comprenant :

   - un bloc fonctionnel de condition de couple de braquage évaluant le fait qu'un couple de braquage nécessaire pour éviter une collision potentielle dans ladite voie voisine est dans une plage,
   - un bloc fonctionnel de condition de menace de voie hôte qui est agencé pour évaluer si une force de freinage nécessaire pour éviter un obstacle sur ladite voie actuelle est au-dessous d'une valeur de seuil,
   - un bloc fonctionnel de condition de comptage de temps qui est agencé pour déterminer si un temps estimé avant collision est au-dessous d'une valeur de seuil, et
   - un système pour la prédiction de trajectoire de collision selon l'une quelconque des revendications 1 à 5.

FIG.1

_FIG.2_

_FIG.3_

26

$T_{TTC}$      $y(t, T_{TTC})$

32

TW 14 $\ddot{r}$
$r, \dot{r}, \propto$
Image

34, 26

36    38    40    → 0/1

28    42

$X_{L1}, X_{L2}$

FIG.4

100

40

50

60

70

80

FIG.5

FIG.6

EP 2 085 279 B1

FIG. 7

29

FIG.8

FIG.9

FIG.10

EP 2 085 279 B1

FIG.11

33

FIG.12

EP 2 085 279 B1

FIG.13

35

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6873286 B
- US 20050090955 A
- US 2003106732 A
- EP 1661751 A

**Non-patent literature cited in the description**

- **A. Eidehall.** An automotive Lane Guidance System. *Thesis no 1122, Linköping Studies in Science and Technology,* 2004
- **Wong, J.Y.** Theory of ground vehicles. John Wiley & Sons, Inc, 1993
- **Wong, J.Y.** Theory of ground vehicles. John Wiley & Sons, Inc, 1993